(19) Europäisches Patentamt
European Patent Office
Office européen des brevets

(11) **EP 2 244 408 B1**

(12) **EUROPÄISCHE PATENTSCHRIFT**

(45) Veröffentlichungstag und Bekanntmachung des Hinweises auf die Patenterteilung:
**20.12.2017 Patentblatt 2017/51**

(51) Int Cl.:
*H04B 17/336* $^{(2015.01)}$  *H04L 1/20* $^{(2006.01)}$

(21) Anmeldenummer: **10002981.8**

(22) Anmeldetag: **22.03.2010**

(54) **Verfahren und Vorrichtung zur Schätzung des Signal-Rausch-Abstands**

Method and device for estimating the signal to noise ratio

Procédé et dispositif d'estimation de rapport signal sur bruit

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.04.2009 DE 102009018780**
**17.06.2009 DE 102009025220**

(43) Veröffentlichungstag der Anmeldung:
**27.10.2010 Patentblatt 2010/43**

(73) Patentinhaber: **Rohde & Schwarz GmbH & Co. KG 81671 München (DE)**

(72) Erfinder: **Volyanskiy, Mikhail 86150 Augsburg (DE)**

(74) Vertreter: **Körfer, Thomas et al Mitscherlich PartmbB Patent- und Rechtsanwälte Postfach 33 06 09 80066 München (DE)**

(56) Entgegenhaltungen:

• **LOPEZ-VALCARCE R ET AL: "Iterative envelope-based SNR estimation for nonconstant modulus constellations", SIGNAL PROCESSING ADVANCES IN WIRELESS COMMUNICATIONS, 2007 - SPAWC 2007 - IEEE 8TH WORKSHOP ON, IEEE, XX, 17. Juni 2007 (2007-06-17), Seiten 1-5, XP031223119, ISBN: 978-1-4244-0954-9**

• **RICE M ET AL: "Estimation techniques for GMSK using linear detectors in satellite communications", IEEE TRANSACTIONS ON AEROSPACE AND ELECTRONIC SYSTEMS, IEEE SERVICE CENTER, PISCATAWAY, NJ, US, Bd. 43, Nr. 4, 1. Oktober 2007 (2007-10-01), Seiten 1484-1495, XP011203413, ISSN: 0018-9251**

• **GEOFFREY W. HILL: "Evaluation and Inversion of the Ratios of Modified Bessel Functions, I1(x) /I0 (x) and I 1.5(x)/ I0.5(x)", ACM TRANSACTIONS ON MATHEMATICAL SOFTWARE, Bd. 7, Nr. 2, 1. Juni 1981 (1981-06-01), Seiten 199-208, XP055142682, ISSN: 0098-3500, DOI: 10.1145/355945.355949**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zur Schätzung des Signal-Rausch-Abstands.

Die Kenntnis des Signal-Rausch-Abstands im Empfangssignal ist für zahlreiche Verfahren im Bereich der Synchronisierung, Kanalschätzung und Dekodierung von Relevanz. Neben Verfahren zur getrennten Messung der Signal- und Rausch-Anteile im Empfangssignal sind auch Verfahren zur Schätzung des Signal-Rausch-Abstands im Empfangssignal bekannt. Einen Überblick über gängige Schätzverfahren des Signal-Rausch-Abstands ist David R. Pauluzzi et al.: "A Comparison on SNR Estimation Techniques for the AWGN Channel" in IEEE Transaction on Communications, Vol. 48, No. 10, Seiten 1681-1691, October 2000, zu entnehmen. Ein Schätzmethode für den Signal-Rausch-Abstand im Falle linear modulierter Empfangssignale basierend auf einer Näherungsformel für die modifizierten Besselfunktion 1-ter Gattung und 1-ter Ordnung ist LOPEZ-VALCARCE R ET AL: "Iterative envelope-based SNR estimation for nonconstant modulus constellations", SPAWC 2007 - IEEE 8TH WORKSHOP, 17. Juni 2007, Seiten 1-5, zu entnehmen. Das gängigste Verfahren zur Schätzung des Signal-Rausch-Abstands basiert auf dem Maximum-Likelihood-Ansatz. Im Fall bestimmter Modulationsverfahren kann bei Anwendung des Maximum-Likelihood-Ansatzes eine nichtlineare Gleichung für die Schätzung des Signal-Rausch-Abstands entstehen, für die eine in sich geschlossene analytische Lösung nicht möglich. Vielmehr muss die Lösung numerisch, mittels beispielsweise des Newton-Raphson-Verfahrens ermittelt werden. Der numerische Aufwand ist bei einer typischerweise hohen Anzahl von Iterationsschritten sehr aufwendig.

Aufgabe der Erfindung ist es deshalb, ein Verfahren und eine Vorrichtung zur Schätzung des Signal-Rausch-Abstands auf der Basis des Maximum-Likelihood-Ansatzes mit einem geringen Berechnungsaufwand zu entwickeln.

Die Erfindungsaufgabe wird durch ein Verfahren zur Ermittlung eines Schätzwerts für einen Signal-Rausch-Abstand eines nichtlinear phasen- oder frequenzmodulierten Empfangssignals mit den Merkmalen des Patentanspruchs 1 sowie durch eine zugehörige Vorrichtung zur Ermittlung eines Schätzwerts für einen Signal-Rausch-Abstand einesnichtlinear phasen- oder frequenzmodulierten Empfangssignals mit den Merkmalen des Patentanspruchs 19 und ein Verfahren zur Ermittlung eines Schätzwerts für einen Signal-Rausch-Abstand eines linear modulierten Empfangssignals mit den Merkmalen des Patentanspruchs 9 sowie eine zugehörige Vorrichtung zur Ermittlung eines Schätzwerts für einen Signal-Rausch-Abstand eines linear modulierten Empfangssignals mit den Merkmalen des Patentanspruchs 20 gelöst. Die Ansprüche 21 bzw. 22 beanspruchen ein entsprechendes digitales Speichermedium bzw. ein entsprechendes Computerprogramm.

Erfindungsgemäß wird der Quotient aus der modifizierten Besselfunktion 1-ter Gattung und 1-ter Ordnung und der modifizierten Besselfunktion 1-ter Gattung und 0-ter Ordnung, der in der nach dem Maximum-Likelihood-Prinzip zu optimierenden nichtlinearen Gleichung enthalten ist, durch einen Term $1 - \dfrac{a}{x}$ genähert, wobei die Größe $a$ einen zu optimierenden Abgleichfaktor und die Größe $x$ das Argument des Quotienten aus den modifizierten Besselfunktionen darstellt. Durch diese Näherung entsteht eine quadratische Gleichung, für die es eine in sich geschlossene analytische Lösung gibt.

Die erfindungsgemäßen Verfahren und die erfindungsgemäßen Vorrichtungen beziehen sich einerseits auf nichtlinear phasen- oder frequenzmodulierte Empfangssignale, bevorzugt full-response-continous-phase-modulation-Empfangssignale (FR-CPM-Empfangssignal), worunter beispielsweise continous-phase-frequency-shift-keying-Empfangssignale (CPFSK-Empfangssignale) fallen, und andererseits auf linear modulierte Empfangsignale (beispielsweise 16-QAM, M-ASK, 16-APSK, M-PSK, M-DPSK).

Im wesentlichen basieren die Verfahren auf der wechselseitigen iterativen Berechnung von Schätzwerten für die Signal- und Rauschleistung einerseits und von bedingten Wahrscheinlichkeiten für die Übereinstimmung eines gesendeten Datensymbols in einer Folge von gesendeten Datensymbolen mit Datensymbolen des Symbolalphabets bei gemessenen matched-gefilterten Empfangssignalen im Fall eines nichtlinear phasen- oder frequenzmodulierten Empfangssignals bzw. von bedingten Wahrscheinlichkeiten für die Übereinstimmung der Amplitude eines gesendeten Datensymbols in einer Folge von gesendeten Datensymbolen mit Amplitudenwerten des Symbolalphabets bei einem gemessenen matched-gefilterten Empfangssignal im Fall eines linear modulierten Empfangssignals.

Während im Fall eines linear modulierten Empfangssignals die Amplituden des Empfangssignals gemessen werden und in die Schätzungen der Leistungspegel des Sendesignals und des Rauschsignals und in die Berechnung der einzelnen bedingten Wahrscheinlichkeiten eingehen, wird das Empfangssignal im Fall eines nichtlinear phasen- oder frequenzmodulierten Empfangssignal jeweils in einer der Mächtigkeit des Symbolalphabets entsprechenden Anzahl von Matched-Filtern gefiltert, deren Impulsantwort jeweils der komplexen Einhüllenden eines im Sendesignal modulierten Datensymbols des Symbolalphabets entspricht, und gehen die Amplituden der einzelnen Ausgangssignale der Matched-Filter in die Schätzungender quadrierten Fadingamplituden und die Leistungspegel des Rauschsignals und in.die Berechnung der einzelnen bedingten Wahrscheinlichkeiten ein.

Die Iteration wird abgebrochen, sobald ein definiertes Konvergenzkriterium für den Schätzwert des Signal-

Rausch-Abstands, beispielsweise wenn die Änderung des Schätzwerts von Iterationsstufe zu Iterationsstufe einen unteren Schwellwert unterschreitet, erreicht ist.

Während bei der iterativen Berechnung der Schätzwerte für die Signal- und Rauschleistung des Empfangssignals zuvor ermittelte Werte der einzelnen bedingten Wahrscheinlichkeiten eingehen, berechnen sich die einzelnen bedingten Wahrscheinlichkeiten aus zuvor ermittelten Schätzwerten für die Signal- und Rauschleistung. In der ersten Iterationsstufe werden für die einzelnen bedingten Wahrscheinlichkeiten Näherungen verwendet, die in die Schätzung der Signal- und Rauschleistung münden. In allen weiteren Iterationsstufen werden für die Schätzung der Signal- und Rauschleistung die in der jeweils vorhergehenden Iterationsstufe ermittelten bedingten Wahrscheinlichkeiten benutzt und für die Berechnung der einzelnen bedingten Wahrscheinlichkeiten die in derselben Iterationsstufe ermittelten Schätzwerte für die Signal- und Rauschleistung verwendet.

Für die Berechnung der bedingten Wahrscheinlichkeiten werden unter Anwendung der Bayes-Regel die zugehörigen nicht bedingten Wahrscheinlichkeiten verwendet, für die entweder vorab ermittelte a-priori-Wahrscheinlichkeiten oder von einem den Schätzer nachfolgenden Dekodierer ermittelte a-posteriori-Wahrscheinlichkeiten benutzt werden.

Im Folgenden werden Ausführungsbeispiele der erfindungsgemäßen Verfahren und der erfindungsgemäßen Vorrichtungen zur Schätzung des Signal-Rausch-Abstands beispielhaft anhand der Zeichnung im Detail erläutert. Die Figuren der Zeichnung zeigen:

Fig. 1    ein Blockdiagramm der erfindungsgemäßen Vorrichtung zur Ermittlung eines Schätzwerts für den Signal-Rausch-Abstand eines nichtlinear phasen- oder frequenzmodulierten Empfangssignals,

Fig. 2    ein Blockdiagramm der erfindungsgemäßen Vorrichtung zur Ermittlung eines Schätzwerts für den Signal-Rausch-Abstand eines linear modulierten Empfangssignals,

Fig. 3    ein Flussdiagramm des erfindungsgemäßen Verfahrens zur Ermittlung eines Schätzwerts für den Signal-Rausch-Abstand eines nichtlinear phasen- oder frequenzmodulierten Empfangssignals,

Fig. 4    ein Flussdiagramm des erfindungsgemäßen Verfahrens zur Ermittlung eines Schätzwerts für den Signal-Rausch-Abstand eines linear modulierten Empfangssignals,

Fig. 5    ein Diagramm des normalisierten mittleren Schätzfehlers über dem Signal-Rauschabstand für ein CPSK-moduliertes Signal nach dem Stand der Technik und nach dem erfindungsgemäßen Verfahren bzw. der erfindungsgemäßen Vorrichtung und

Fig. 6    ein Diagramm des normalisierten mittleren Schätzfehlers über dem Signal-Rauschabstand für ein 16QAM-moduliertes Signal nach dem Stand der Technik und nach dem erfindungsgemäßen Verfahren bzw. der erfindungsgemäßen Vorrichtung bei verschiedenen Anpaßfaktoren a.

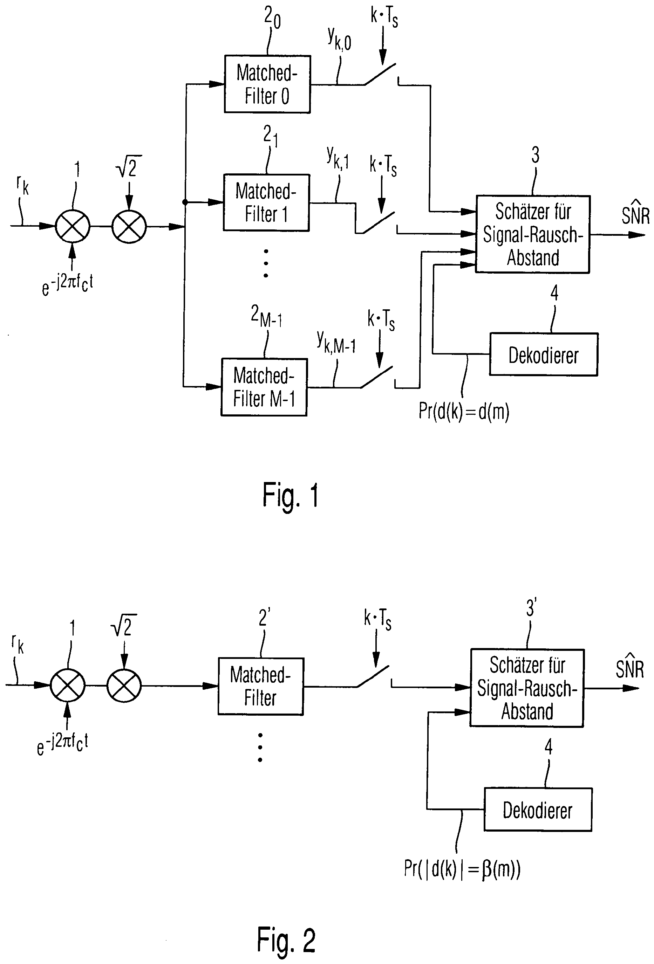

Bevor die erfindungsgemäßen Vorrichtungen und die erfindungsgemäßen Verfahren anhand der Figuren 1 bis 4 im Detail erläutert werden, werden im folgenden die für das Verständnis der Erfindung erforderlichen mathematischen Grundlagen hergeleitet:

Im ersten Teil werden die mathematischen Grundlagen für den Fall des nichtlinear phasen- oder frequenzmodulierten Empfangssignal, bevorzugt für den Fall des full-response-CPM-modulierten Empfangssignale, worunter beispielsweise ein CPFSK-moduliertes Empfangssignal fällt, hergeleitet:

Ein M-wertiges nichtlinear phasen- oder frequenzmoduliertes Sendesignal $s_{FM}(t)$, insbesondere ein CPFSK-moduliertes Sendesignal $s_{CPFSK}(t)$, mit Einheitsamplitude lässt sich gemäß Gleichung (1) darstellen, wobei $\Delta F$ der Frequenzhub, $T_S$ die Symboldauer, $d(k)$ ein Datensymbol des $M$-wertigen Symbolalphabets mit $d(k) \in [\pm 1, \pm 3, ..., \pm(M - 1)]$ und $g(t)$ die Frequenzimpulsantwort und $\varphi_0$ die Anfangsphase der CPSK-Modulation sind. Der zugehörige Modulationsindex $h$ ergibt sich gemäß Gleichung (2). Die Phasenimpulsantwort $q(t)$ errechnet sich gemäß Gleichung (3) aus der Frequenzimpulsantwort g(t) und ist bevorzugt eine volle Impulsantwort (Full Impulse Response) mit $q(t) = 0$ für $t < 0$ und $q(t) = 1$ für $t \geq T_S$:

$$s_{CPFSK}(t) = \frac{1}{\sqrt{T_S}} \cdot \exp\left[ j(2\pi\Delta F \int_0^t \sum_{k=0}^{K-1} d(k) \cdot g(\zeta - k \cdot T_S)d\zeta + \varphi_0 \right] =$$

$$= \frac{1}{\sqrt{T_S}} \cdot \exp\left[ j(\pi \cdot h \sum_{k=0}^{K-1} d(k) \cdot q(t - k \cdot T_S) + \varphi_0) \right] \qquad (1)$$

mit

$$h = 2 \cdot \Delta F \cdot T_S \qquad (2)$$

$$q(t) = \int_0^t g(\zeta)d\zeta \qquad (3)$$

Die komplexe Hüllkurve $s_{d(k)}(t)$ des CPFSK-modulierten Sendesignals $s_{CPFSK}(t)$ bei einem einzigen Datensymbol $d(k)$ und bei einer Anfangsphase $\varphi_0$ von Null ergibt sich entsprechend Gleichung (4):

$$s_{d(k)}(t) = \frac{1}{\sqrt{T_S}} \cdot \exp\left[ j(\pi \cdot h \cdot d(k) \cdot q(t)) \right] \qquad (4)$$

Bei einem Übertragungskanal mit überlagerten weißen, Gauss-verteilten Rauschen (AWGN) ergibt sich das reelle Empfangssignal $r_{d(k)}(t)$ des zum Zeitpunkt $k \cdot T_S$ übertragenen Datensymbols $d(k)$ im nichtlinear phasen- oder frequenzmodulierten Empfangssignal $r_{FM}(t)$, insbesondere in einem CPSK-modulierten Empfangssignal $r_{CPSK}(t)$, gemäß Gleichung (5) aus dem Realteil einer Summe, die von der komplexen Einhüllenden $s_{d(k)}(t)$ des zum Zeitpunkt $k \cdot T_S$ übertragenen Datensymbols $d(k)$ im zugehörigen Sendesignal $s_{CPFSK}(t)$ und vom Rauschsignal $z_k(t)$ im Zeitintervall der komplexen Einhüllenden $s_{d(k)}(t)$ des zum Zeitpunkt $k \cdot T_S$ übertragenen Datensymbols $d(k)$, das ein weißes Gauss-verteiltes Rauschen mit einem Mittelwert von 0 und mit einer zweiseitigen spektralen Rauschleistungsdichte von 0,5 ist, abhängig ist. $\sqrt{S}$ und $N_0$ stellen die Fading-Amplitude und die Rauschleistung des Empfangssignals $r_{CPSK}(t)$, $f_C$ die Trägerfrequenz und $\theta_k$ die unbekannte, möglicherweise zeitveränderliche Phasendrehung im Übertragungskanal dar.

$$r_{d(k)}(t) = \text{Re}\left\{ \sqrt{2S} \cdot s_{d(k)}(t) \cdot \exp\left( j(2\pi f_c \cdot t + \theta_k) \right) \right\} + \sqrt{N_0} \cdot z_k(t) \qquad (5)$$

Das Empfangssignal $r_{d(k)}(t)$ wird in jeweils $M$ Matched-Filtern gefiltert, deren Impulsantwort sich jeweils nach dem Matched-Filter-Kriterium mithilfe der zeitgespiegelten, konjugiert-komplexen Einhüllenden des mit einem der Datensymbole $\alpha(m)$ des Symbolalphabets modulierten Sendesignals $s_{\alpha(m)}^*(-t)$ ermitteln lässt. Das Ausgangssignal $y_{k,m}$ des jeweiligen Matched-Filters im Zeitpunkt $k \cdot T_S$ ergibt sich gemäß Gleichung (6) mit der zugehörigen Kreuzenergie $\rho_{k,m}$ gemäß Gleichung (7). $z_{k,m}$ ergibt sich gemäß Gleichung (8) und ist ein komplexes weißes, Gauss-verteiltes Rauschen mit einem Mittelwert von Null und einer Varianz von 1.

$$y_{k,m} = \sqrt{S} \cdot \rho_{k,m} \cdot \exp\left( j\theta_k \right) + \sqrt{N_0} \cdot z_{k,m} \qquad (6)$$

$$\rho_{k,m} = \int_0^{T_S} s_{d(k)}(t) \cdot s_{\alpha(m)}^*(t)dt \qquad (7)$$

$$z_{k,m} = \sqrt{2} \cdot \int_0^{T_S} z_k(t) \cdot e^{-j2\pi f_c t} \cdot s_{\alpha(m)}^{\bullet}(t)\,dt \qquad (8)$$

Die im Zeitpunkt $k \cdot T_S$ abgetasteten Ausgangssignale aller Matched-Filter werden gemäß Gleichung (9) in einem Vektor $\underline{y}_k$ zusammengefasst.

$$\underline{y}_k = \begin{bmatrix} y_{k,0} & \cdots & y_{k,M-1} \end{bmatrix}^T \qquad (9)$$

Ausgehend vom Zusammenhang zwischen den Ausgangssignalen $\underline{y}_k$ aller Matched-Filter im Zeitpunkt $k \cdot T_S$ und dem Rauschsignal $\underline{z}_k = [z_{k,0} \,.. \, z_{k,i} \,.. \, z_{k,M-1}]^T$ in Gleichung (10) und der Definition für die Matrix $R$, deren Matrixelemente Kreuzenergien gemäß Gleichung (11) enthalten, ergibt sich entsprechend Gleichung (12) die für die Maximum-Likelihood-Schätzung des Signal-Rausch-Abstands erforderliche bedingte Wahrscheinlichkeitsdichtefunktion $f(\underline{y}_k|\Phi, d(k) = \alpha(m))$ der Matched-Filter-Ausgangssignale $\underline{y}_k$ bei gegebenem Vektor $\Phi = \begin{bmatrix} \sqrt{S} & N_0 \end{bmatrix}$ und bei Übereinstimmung des empfangenen Datensymbols $d(k)$ mit dem Datensymbol $\alpha(m)$ des Symbolalphabets.

$$\underline{y}_k = E\left(\underline{y}_k\right) + \underline{z}_k \qquad (10)$$

$$R = E\left(\underline{z}_k \cdot \underline{z}_k^H\right) = \begin{bmatrix} \rho_{0,0} & .. & .. & .. & \rho_{0,M-1} \\ \vdots & .. & .. & .. & \vdots \\ \vdots & .. & \rho_{o,m} & .. & \vdots \\ \vdots & .. & .. & .. & \vdots \\ \rho_{O-1,0} & .. & .. & .. & \rho_{O-1,M-1} \end{bmatrix} \qquad (11)$$

$$f(\underline{y}_k \mid \Phi, d(k) = \alpha(m), \theta_k) = \frac{1}{\pi^M \cdot N_0^M \cdot \det\{R\}} \cdot \exp\left(-\frac{1}{N_0} \cdot (\underline{y}_k - E\left(\underline{y}_k\right))^H \cdot R^{-1} \cdot (\underline{y}_k - E\left(\underline{y}_k\right))\right)$$

$$(12)$$

Das Argument $Q_k = (\underline{y}_k - E(\underline{y}_k))^H \cdot R^{-1} \cdot (\underline{y}_k - E(\underline{y}_k))$ im Exponentialterm der Wahrscheinlichkeitsdichtefunktion $f(\underline{y}_k|\Phi, d(k) = \alpha(m), \theta_k)$ in Gleichung (12) führt durch Ausmultiplizieren in die mathematische Beziehung in Gleichung (13).

$$Q_k = (\underline{y}_k - E\left(\underline{y}_k\right))^H \cdot R^{-1} \cdot (\underline{y}_k - E\left(\underline{y}_k\right)) =$$
$$= \underline{y}_k^H \cdot R^{-1} \cdot \underline{y}_k + E\left(\underline{y}_k^H\right) \cdot R^{-1} \cdot E\left(\underline{y}_k\right) - 2 \cdot \mathrm{Re}\left\{\underline{y}_k^H \cdot R^{-1} \cdot E\left(\underline{y}_k\right)\right\} \qquad (13)$$

Aus Gleichung (6) und Gleichung (10) folgt unter Berücksichtigung von Gleichung (11), dass der Erwartungswert $E(\underline{y}_k)$ über alle Matched-Filter-Ausgangssignale $\underline{y}_k$ proportional zur $k$-ten Spalte der Matrix R gemäß Gleichung (14) ist.

$$E\left(\underline{y}_k\right) = \sqrt{S} \cdot e^{j\theta_k} \cdot R_{k,:} \qquad (14)$$

Da $R^{-1} \cdot R = I$ ist, ist einzig die $k$-te Komponente von $R^{-1} \cdot E(\underline{y}_k)$ in Gleichung (13) nicht Null, so dass Gleichung (13) in Gleichung (15) überführbar ist.

$$Q_k = \underline{y}_k^H \cdot R^{-1} \cdot \underline{y}_k + S - 2 \cdot \sqrt{S} \cdot \mathrm{Re}\left\{y_{k,m} \cdot e^{-j\theta_k}\right\} \qquad (15)$$

Wenn man $y_{k,m}$ in Polar-Koordinaten - $y_{k,m} = |y_{k,m}| \cdot e^{j\arg\{y_{k,m}\}}$ - ausdrückt und man bei gleich verteilten Phasenwinkel $\theta_k$ über $[0,2\pi)$ über den Phasenwinkel $\theta_k$ integriert, so erhält man ausgehend von Gleichung (12) eine mathematische Beziehung für die Wahrscheinlichkeitsdichtefunktion $f(\underline{y}_k | \Phi, d(k) = \alpha(m))$ gemäß Gleichung (16) mit der modifizierten Besselfunktion $I_0(.)$ der 1-ten Gattung und der 0-ten Ordnung.

$$f(\underline{y}_k \mid \Phi, d(k) = \alpha(m)) = \frac{1}{\pi^M \cdot N_0^M \cdot \det\{R\}} \cdot \exp\left(-\frac{\underline{y}_k^H \cdot R^{-1} \cdot \underline{y}_k + S}{N_0}\right) \cdot I_0\left(\frac{2\sqrt{S} \cdot |y_{k,m}|}{N_0}\right)$$

$$(16)$$

Da die einzelnen Matched-Filter-Ausgangssignale $\underline{y}_k$ zu den einzelnen Zeitpunkten $k = 0,...,K - 1$ unabhängig voneinander sind, kann eine Wahrscheinlichkeitsdichtefunktion $f(Y|\Phi)$ mit der Matrix $Y$ aus den einzelnen Matched-Filter-Ausgangssignale $\underline{y}_k$ zu den einzelnen Zeitpunkten $k = 0,...,K - 1$ gemäß Gleichung (17) ermittelt werden, die gemäß Gleichung (18) aus dem Produkt der einzelnen Wahrscheinlichkeitsdichtefunktionen $f(\underline{y}_k|\Phi)$ ermittelbar ist. Die Wahrscheinlichkeitsdichtefunktion $f(\underline{y}_k|\Phi)$ ergibt sich wiederum gemäß Gleichung (18) aus der Mittelung der mit der bedingten Wahrscheinlichkeit $\Pr\{d(k) = \alpha(m)|\hat{\Phi}, \underline{y}_k\}$ gewichteten Wahrscheinlichkeitsfunktion $f(\underline{y}_k|\Phi, d(k) = \alpha(m))$ über alle Datensymbole $\alpha(m)$ des Symbolalphabets.

$$Y = \begin{bmatrix} \underline{y}_0 & \cdot\cdot & \underline{y}_{K-1} \end{bmatrix}^T \qquad (17)$$

$$f(Y \mid \Phi) = \prod_{k=0}^{K-1} f(\underline{y}_k \mid \Phi) =$$

$$= \prod_{k=0}^{K-1} \sum_{m=0}^{M-1} \Pr\left\{d(k) = \alpha(m) \mid \hat{\Phi}, \underline{y}_k\right\} \cdot f\left(\underline{y}_k \mid \Phi, d(k) = \alpha(m)\right) \qquad (18)$$

Ein Schätzwert $\hat{\Phi}$ für den gesuchten Vektor $\Phi = \begin{bmatrix} \sqrt{S} & N_0 \end{bmatrix}$ ergibt sich nach dem Maximum-Likelihood-Ansatz gemäß Gleichung (19) durch Maximierung der Wahrscheinlichkeitsdichtefunktion $f(Y|\Phi)$.

$$\hat{\Phi} = \arg\max_{\Phi}\left\{f(Y \mid \Phi)\right\} \qquad (19)$$

Aufgrund der Komplexität der Wahrscheinlichkeitsdichtefunktion $f(Y|\Phi)$ lässt sich für das Optimierungsproblem in Gleichung (19) keine in sich geschlossene Lösung angeben. Ein Ausweg aus dieser Situation bietet sich durch Anwendung des Expectation-Maximization-Approaches, wie er beispielsweise in N. Noels et al.: "A Theoretical Framework for Soft-Information-Based Synchronization in Iterative (Turbo) Receivers", EURASIP Journal on Wireless Communications and Networking, 2005-2, Seite 117 bis 129, beschrieben ist.

Unter Anwendung des Expectation-Maximization-Approaches wird gemäß Gleichung (20) eine Hilfsfunktion $\Lambda(\tilde{\Phi}, \hat{\Phi}^{(n-1)})$ eingeführt, die dem Erwartungswert $E_{\alpha(m)}\{\}$ des natürlichen Logarithmus der Wahrscheinlichkeitsdichtefunktion $\ln[f(Y|\Phi, d(k) = \alpha(m))]$ entspricht.

$$\Lambda(\Phi, \hat{\Phi}^{(n-1)}) = E_{\alpha(m)}\left\{\ln\left(f(Y \mid \Phi, d(k) = \alpha(m))\right) \mid Y, \hat{\Phi}^{(n-1)}\right\} \qquad (20)$$

Der mathematische Term für die Hilfsfunktion $\Lambda(\tilde{\Phi}, \hat{\Phi}^{(n-1)})$ lässt sich unter Zuhilfenahme von Gleichung (16) nach Gleichung (21) zuzüglich Gleichung (22) umformen.

$$\Lambda(\widetilde{\Phi}, \widehat{\Phi}^{(n-1)}) = \sum_{k=0}^{K-1} \sum_{m=0}^{M-1} p_{k,m}^{(n-1)} \cdot$$

$$\cdot \left[ -\log\left[ \pi^M \cdot \det\{R\} \right] - M \cdot \log N_0 - \frac{\underline{y}_k^H \cdot R^{-1} \cdot \underline{y}_k + S}{N_0} + \log\left[ I_0(\frac{2 \cdot \sqrt{S} \cdot |y_{k,m}|}{N_0}) \right] \right] =$$

$$= -K \cdot \log\left[ \pi^M \cdot \det\{R\} \right] - K \cdot M \cdot \log N_0 - \frac{K \cdot D}{N_0} - \frac{K \cdot S}{N_0} + \sum_{k=0}^{K-1} \sum_{m=0}^{M-1} p_{k,m}^{(n-1)} \cdot \log\left[ I_0(\frac{2 \cdot \sqrt{S} \cdot |y_{k,m}|}{N_0}) \right]$$

$$(21)$$

mit

$$D = \frac{1}{K} \cdot \sum_{k=0}^{K-1} \underline{y}_k^H \cdot R^{-1} \cdot \underline{y}_k \tag{22}$$

Die Ableitungen der Hilfsfunktion $\Lambda(\widetilde{\Phi}, \widehat{\Phi}^{(n-1)})$ nach den gesuchten Element $N_0$ und $\sqrt{S}$ des Vektors $\Phi$ ergeben sich im Sinne des Expectation-Maximization-Approaches gemäß Gleichung (23) und (24) mit der Hilfsgröße $\Psi(x)$, die sich gemäß Gleichung (25) aus dem Quotient der modifizierten Besselfunktion $I_1(.)$ erster Gattung und erster Ordnung und der modifizierten Besselfunktion $I_0(.)$ erster Gattung und nullter Ordnung berechnen lässt.

$$\frac{\partial \Lambda(\widetilde{\Phi}, \widehat{\Phi}^{(n-1)})}{\partial N_0} = -\frac{K \cdot M}{N_0} + \frac{K \cdot D}{N_0^2} + \frac{K \cdot S}{N_0^2} -$$

$$\sum_{k=0}^{K-1} \sum_{m=0}^{M-1} \frac{2 \cdot \sqrt{S} \cdot |y_{k,m}| \cdot p_{k,m}^{(n-1)}}{N_0^2} \cdot \Psi\left( \frac{2 \cdot \sqrt{S} \cdot |y_{k,m}|}{N_0} \right) = 0 \tag{23}$$

$$\frac{\partial \Lambda(\widetilde{\Phi}, \widehat{\Phi}^{(n-1)})}{\partial \sqrt{S}} = -\frac{2 \cdot K \cdot \sqrt{S}}{N_0} + \sum_{k=0}^{K-1} \sum_{m=0}^{M-1} \frac{2 \cdot |y_{k,m}| \cdot p_{k,m}^{(n-1)}}{N_0} \cdot \Psi\left( \frac{2 \cdot \sqrt{S} \cdot |y_{k,m}|}{N_0} \right) = 0 \tag{24}$$

$$\Psi(x) = \frac{I_1(x)}{I_0(x)} \tag{25}$$

Gleichung (24) lässt sich nach Gleichung (26) mathematisch umformen.

$$\frac{\sqrt{S}}{N_0} \cdot \sum_{k=0}^{K-1} \sum_{m=0}^{M-1} \frac{2 \cdot |y_{k,m}| \cdot p_{k,m}^{(n-1)}}{N_0} \cdot \Psi\left( \frac{2\sqrt{S} \cdot |y_{k,m}|}{N_0} \right) = \frac{\sqrt{S}}{N_0} \cdot \frac{2K \cdot \sqrt{S}}{N_0} \tag{26}$$

Der Term auf der linken Seite von Gleichung (26) entspricht einem Term in Gleichung (23), so dass der rechte Term von Gleichung (26) in Gleichung (23) eingesetzt werden kann und zu Gleichung (27) führt.

$$-\frac{K \cdot M}{N_0} + \frac{K \cdot D}{N_0^2} + \frac{K \cdot S}{N_0^2} - \frac{2K \cdot S}{N_0^2} = 0 \tag{27}$$

Aus Gleichung (27) ergibt sich durch mathematische Umformung die mathematische Beziehung für die gesuchte

Rauschleistung $N_0$ gemäß Gleichung (28).

$$N_0 = \frac{1}{M} \cdot (D - S) \tag{28}$$

Gleichung (28) in Gleichung (24) eingesetzt, liefert nach mathematischer Umformung die mathematische Beziehung für die gesuchte Größe $\sqrt{S}$ gemäß Gleichung (29).

$$\sqrt{S} = \frac{1}{K} \cdot \sum_{k=0}^{K-1} \sum_{m=0}^{M-1} \left| y_{k,m} \right| \cdot p_{k,m}^{(n-1)} \cdot \Psi\left( \frac{2 \cdot M \cdot \sqrt{S} \cdot \left| y_{k,m} \right|}{D - S} \right) \tag{29}$$

Gleichung (29) stellt eine nichtlineare Gleichung dar, die geschlossen analytisch nicht lösbar ist. Nach dem Stand der Technik wird diese nichtlineare Gleichung numerisch mittels beispielsweise Newton-Raphson-Verfahren gelöst. Erfindungsgemäß wird die Hilfsfunktion $\Psi(x)$ durch eine Näherung gemäß Gleichung (30) approximiert.

$$\Psi(x) \approx 1 - \frac{a}{x} \tag{30}$$

Mit dieser Approximation lässt sich Gleichung (29) in Gleichung (31) umformen.

$$\sqrt{S} = \frac{1}{K} \cdot \sum_{k=0}^{K-1} \sum_{m=0}^{M-1} \left| y_{k,m} \right| \cdot p_{k,m}^{(n-1)} \cdot \left( 1 - \frac{a(D-S)}{2 \cdot M \cdot \sqrt{S} \cdot \left| y_{k,m} \right|} \right) =$$
$$= \frac{1}{K} \cdot \sum_{k=0}^{K-1} \sum_{m=0}^{M-1} \left| y_{k,m} \right| \cdot p_{k,m}^{(n-1)} - \frac{a(D-S)}{2 \cdot K \cdot M \cdot \sqrt{S}} \cdot \sum_{k=0}^{K-1} \sum_{m=0}^{M-1} p_{k,m}^{(n-1)} \tag{31}$$

Durch die Tatsache, dass die Summe der bedingten Wahrscheinlichkeiten $\sum_{m=0}^{M-1} p_{k,m}^{(n-1)}$ über alle Symbole des Symbolalphabets $a(m)$ mit m=0,1,..,M-1 genau 1 ergibt, kann Gleichung (31) unter Einführung der Hilfsgröße $B^{(n-1)}$ im vorherigen Iterationsschritt n-1 gemäß Gleichung (33) nach Gleichung (32) mathematisch umgeformt werden, die eine geschlossene Lösung für den Schätzwert $\widetilde{\sqrt{S}}^{(n)}$ für die gesuchte Größe $\sqrt{S}$ im Iterationsschritt $n$ gemäß Gleichung (34) ermöglicht.

$$(2 \cdot M - a) \cdot S - 2 \cdot M \cdot B^{(n-1)} \cdot \sqrt{S} + a \cdot D = 0 \tag{32}$$

$$B^{(n-1)} = \frac{1}{K} \cdot \sum_{k=0}^{K-1} \sum_{m=0}^{M-1} \left| y_{k,m} \right| \cdot p_{k,m}^{(n-1)} \tag{33}$$

$$\widetilde{\sqrt{S}}^{(n)} = \frac{2 \cdot B^{(n-1)} + \sqrt{4 \cdot \left[ M \cdot B^{(n-1)} \right]^2 - 4 \cdot (2 \cdot M - a) \cdot a \cdot D}}{2(2 \cdot M - a)} \tag{34}$$

Ein Schätzwert $\hat{N}_0^{(n)}$ für die Rauschleistung $N_0$ im Iterationsschritt n ergibt sich gemäß Gleichung (35) ausgehend von Gleichung (28) unter Berücksichtigung von Gleichung (34).

$$\widehat{N}_0{}^{(n)} = \frac{1}{M} \cdot \left( D - \widehat{S}^{(n)} \right) \qquad (35)$$

Da für die Berechnung der Hilfsgröße $B^{(n-1)}$ im vorherigen Iterationsschritt $n$-1 gemäß Gleichung (33) und damit auch für die Ermittlung des Schätzwerts $\widehat{\sqrt{S}}^{(n)}$ der gesuchten Größe $\sqrt{S}$ im Iterationsschritt n gemäß Gleichung (34) und des Schätzwerts $\hat{N}_0{}^{(n)}$ für die Rauschleistung $N_0$ im Iterationsschritt n gemäß Gleichung (35) die bedingte Wahrscheinlichkeit $p_{k,m}{}^{(n-1)} = \Pr\{d(k) = \alpha(m)|\hat{\Phi}^{(n-1)}, \underline{y}_k\}$ im Iterationsschritt $n$-1 benötigt wird, muss diese vor Ermittlung der Schätzwerte $\widehat{\sqrt{S}}^{(n)}$ und $\hat{N}_0{}^{(n)}$ bestimmt werden.

Die bedingte Wahrscheinlichkeit $p_{k,m}{}^{(n-1)} = \Pr\{d(k) = \alpha(m)|\hat{\Phi}^{(n-1)}, \underline{y}_k\}$ ergibt sich gemäß Gleichung (36) unter Anwendung der Bayes-Regel.

$$p_{k,m}{}^{(n)} = \Pr\left( d(k) = \alpha(m) \,|\, \widehat{\Phi}^{(n)}, \underline{y}_k \right) = \frac{f(\underline{y}_k \,|\, \widehat{\Phi}^{(n)}, d(k) = \alpha(m)) \cdot \Pr(d(k) = \alpha(m) \,|\, \widehat{\Phi}^{(n)})}{f(\underline{y}_k \,|\, \widehat{\Phi}^{(n)})}$$

$$(36)$$

Hierbei kann die bedingte Wahrscheinlichkeit $\Pr(d(k) = \alpha(m)|\hat{\Phi}^{(n)})$ in Gleichung (36) durch die unbedingte Wahrscheinlichkeit $\Pr(d(k) = \alpha(m))$ ersetzt werden, da die Wahrscheinlichkeit $\Pr(d(k) = \alpha(m)|\hat{\Phi}^{(n)})$ vom Signal-Rausch-Abstand $\Phi$ unabhängig ist. Die bedingte Wahrscheinlichkeitsdichtefunktion $f(\underline{y}_k|\Phi^{(n)})$ in Gleichung (36) ergibt sich gemäß Gleichung (37) aus der Mittelung der bedingten Wahrscheinlichkeitsdichtefunktion $f(\underline{y}_k, d(k) = \alpha(m)|\hat{\Phi}^{(n)})$ über alle Datensymbole $\alpha(m)$ des Symbolalphabets, welche sich wiederum gemäß der Stochastik aus dem Produkt der bedingten Wahrscheinlichkeitsdichtefunktion $f(\underline{y}_k|\hat{\Phi}^{(n)}, d(k) = \alpha(m))$ und der bedingten Wahrscheinlichkeit $\Pr(d(k) = \alpha(m)|\hat{\Phi}^{(n)})$ zusammensetzt.

$$f(\underline{y}_k \,|\, \widehat{\Phi}^{(n)}) = \sum_{m=0}^{M-1} f(\underline{y}_k, d(k) = \alpha(m) \,|\, \widehat{\Phi}^{(n)}) =$$

$$= \sum_{m=0}^{M-1} f\left( \underline{y}_k \,|\, \widehat{\Phi}^{(n)}, d(k) = \alpha(m) \right) \cdot \Pr\left\{ d(k) = \alpha(m) \,|\, \widehat{\Phi}^{(n)} \right\}$$

$$(37)$$

Bei Berücksichtigung dieser Erkenntnisse ergibt sich ausgehend von Gleichung (36) somit die bedingte Wahrscheinlichkeit $p_{k,m}{}^{(n)}$ gemäß Gleichung (38), die einen Normalisierungsfaktor $\mu_k{}^{(n)}$ gemäß Gleichung (39) enthält.

$$p_{k,m}{}^{(n)} = \mu_k{}^{(n)} \cdot I_0\left( \frac{2\sqrt{S}^{(n)} \cdot |y_{k,m}|}{N_0{}^{(n)}} \right) \cdot \Pr\left( d(k) = \alpha(m) \right) \qquad (38)$$

$$\mu_k{}^{(n)} = \frac{1}{\displaystyle\sum_{m=0}^{M-1} I_0\left( \frac{2\sqrt{S}^{(n)} \cdot |y_{k,m}|}{N_0{}^{(n)}} \right) \cdot \Pr\left( d(k) = \alpha(m) \right)} \qquad (39)$$

Die Summe der bedingten Wahrscheinlichkeiten $\displaystyle\sum_{m=0}^{M-1} p_{k,m}{}^{(n-1)}$ über alle Symbole des Symbolalphabets $d(m)$

mit m=0,1,..,M-1 ergibt bei Berücksichtigung des Normalisierungsfaktors $\mu_k^{(n)}$ den korrekten Wert 1,

In der Initialisierung wird die Hilfsgröße $B^{(0)}$ im Iterationsschritt 0 ermittelt, die ausgehend von Gleichung (34) aufgrund fehlender Kenntnis der bedingten Wahrscheinlichkeit $p_{k,m}^{(0)}$ im Iterationsschritt 0 durch die im $k$ -ten Zeitpunkt jeweils maximale Matched-Filter-Ausgangsgröße gemäß Gleichung (40) genähert wird.

$$B^{(0)} = \frac{1}{K} \cdot \sum_{k=0}^{K-1} \max_m \left\{ \left| y_{k,m} \right|, m = 0,1,...,M-1 \right\} \qquad (40)$$

Nach der Initialisierung werden in aufeinander folgenden Iterationsschritten n jeweils zuerst der Schätzwert $\hat{S}^{(n)}$ für die Signalleistung S durch Quadrierung aus dem ermittelten Schätzwert $\widetilde{\sqrt{S}}^{(n)}$ der gesuchten Größe $\sqrt{S}$ - und der Schätzwert $\hat{N}_0^{(n)}$ der gesuchten Rauschleistung $N_0$ und anschließend die einzelnen bedingten Wahrscheinlichkeiten $p_{k,m}^{(n)}$ für alle $k = 0,1,...,K$ - 1 und alle $m = 0,1,...,M$ - 1 iterativ ermittelt. Der Schätzwert $\widetilde{SNR}^{(n)}$ für den Signal- Rauschabstand lässt sich gemäß Gleichung (41) ermitteln.

$$\widetilde{SNR}^{(n)} = \frac{\hat{S}^{(n)}}{\hat{N}_0^{(n)}} \qquad (41)$$

Im zweiten Teil werden die mathematischen Grundlagen für den Fall des linear modulierten Empfangssignal hergeleitet:

Vom Sender wird gemäß Gleichung (42) ein Sendesignal $s_{LM}(t)$ abgestrahlt, wobei $c(k) = |c(k)| \cdot e^{j\varphi_k}$ ein Datensymbol eines M-wertigen Symbolalphabets, $g_T(.)$ die Impulsantwort des Senderfilters, $f_C$ die Trägerfrequenz und $T_S$ die Symboldauer ist.

$$s_{LM}(t) = \sqrt{2} \cdot \mathrm{Re} \left\{ \sum_{k=0}^{K-1} c(k) \cdot g_T(t - k \cdot T_S) \cdot \exp\left( j2\pi \cdot f_C \cdot t \right) \right\} \qquad (42)$$

Das korrespondierende Empfangssignal $r_{LM}(t)$ ergibt sich bei einem AWGN- oder einem flat-fading-Übertragungskanal gemäß Gleichung (43), wobei $\sqrt{S}$ die Fading-Amplitude, $\theta_k$ die unbekannte Phasendrehung im Übertragungskanal und $n(t)$ ein weißes, Gauss-verteiltes Rauschsignal mit Mittelwert 0 und mit zweiseitiger spektraler Rauschleistungsdichte von 0,5 ist.

$$r_{LM}(t) = \sqrt{2S} \cdot \mathrm{Re} \left\{ \sum_{k=0}^{K-1} c(k) \cdot g_T(t - k \cdot T_S) \cdot \exp\left( j2\pi \cdot f_C \cdot t + \theta_k \right) \right\} + n(t) \qquad (43)$$

Das Empfangssignal $r_{LM}(t)$ wird dem Mischen ins Basisband einem Matched-Filter zugeführt, dessen Impulsantwort $g_R(t)$ dem Matched-Filter-Kriterium gemäß Gleichung (44) und der Nyquist-Bedingung gemäß Gleichung (45) genügt.

$$g_R(t) = g_T^*(-t) \qquad (44)$$

$$g_R(t) \otimes g_T(t) = \begin{cases} 1 & t = 0 \\ 0 & t = k \cdot T_S, k = \pm 1, \pm 2,.. \end{cases} \qquad (45)$$

Das Ausgangssignal $r_k$ des Matched-Filters, das zu den Zeitpunkten $t = k \cdot T_S$ abgetastet wird, ergibt sich gemäß Gleichung (46), wobei $N_0$ die Rauschleistung und $z_k$ weißes, Gauss-verteiltes Rauschen mit Mittelwert 0 und Varianz 1 ist.

$$r_k = \sqrt{S} \cdot |c(k)| \cdot \exp(j\theta_k) + \sqrt{N_0} \cdot z_k \qquad (46)$$

Eine mathematische Beziehung für die Wahrscheinlichkeitsdichtefunktion $f(r_k|\Phi, |c(k)| = \beta(m))$ bei gegebenem Vektor $\Phi = \begin{bmatrix} \sqrt{S} & N_0 \end{bmatrix}$ und bei Übereinstimmung der Amplitude $|c(k)|$ des empfangenen Datensymbols $c(k)$ mit der Amplitude $\beta(m)$ des Symbolalphabets eineslinearen Empfangssignals ergibt sich in Anlehnung an Gao, F. et Tepedelenlioglu, C.: "SNR estimation for non-constant modulus constellation" in IEEE Trans. Signal Processing, Vol. 53, März 2005, Seiten 865 bis 870, gemäß Gleichung (47).

$$f(r_k \mid \Phi, |c(k)| = \beta(m)) = \frac{2 \cdot |r_k|}{N_0} \cdot \exp\left[-\frac{|r_k|^2 + S \cdot \beta(m)^2}{N_0}\right] \cdot I_0\left(\frac{2 \cdot \sqrt{S} \cdot \beta(m) \cdot |r_k|}{N_0}\right)$$

$$(47)$$

Die Wahrscheinlichkeitsdichtefunktion $f(\underline{r}|\Phi, |c(k)| = \beta(m))$ mit dem Vektor $\underline{r} = [r_0 \ r_1 \ .. \ r_{K-1}]$ der Empfangssignale $r_k$ zu den einzelnen Meßzeitpunkten $k = 0, 1, .., K-1$ ergibt sich für den Fall des linear modulierten Empfangssignals gemäß Gleichung (48). Die Wahrscheinlichkeitsdichtefunktion $f(r_k|\Phi)$ ergibt sich wiederum gemäß Gleichung (48) aus der Mittelung der mit der bedingten Wahrscheinlichkeit $\Pr\{|c(k)| = \beta(m)|\hat{\Phi}, r_k\}$ gewichteten Wahrscheinlichkeitsfunktion $f(r_k|\Phi, |c(k)| = \beta(m))$ über alle Amplituden $\beta(m)$ des Symbolalphabets.

$$f(\underline{r} \mid \Phi) = \prod_{k=0}^{K-1} f(r_k \mid \Phi) =$$

$$= \prod_{k=0}^{K-1} \sum_{m=0}^{M-1} \Pr\left\{|c(k)| = \beta(m) \mid \hat{\Phi}, r_k\right\} \cdot f(\underline{r_k} \mid \Phi, |c(k)| = \beta(m))$$

$$(48)$$

Der gesuchte Vektor $\Phi = \begin{bmatrix} \sqrt{S} & N_0 \end{bmatrix}$ für die quadrierte Fadingamplitude S und die Rauschleistung $N_0$ ergibt sich wiederum durch Anwendung des Maximum-Likelihood-Ansatzes gemäß Gleichung (49).

$$\hat{\Phi} = \arg\max_{\Phi}\left\{f(\underline{r} \mid \Phi)\right\} \qquad (49)$$

Da aus Gleichung (49) eine in sich geschlossene Lösung bei gegebener Wahrscheinlichkeitsdichtefunktion $f(\underline{r}|\Phi, |c(k)| = \beta(m))$ nicht möglich ist, wird wiederum der Expectation-Maximization-Approach benutzt. Hierzu wird gemäß Gleichung (50) für den Fall eines linear modulierten

Empfangssignals eine Hilfsfunktion $\Lambda(\tilde{\Phi}, \hat{\Phi}^{(n-1)})$ eingeführt, die dem Erwartungswert $E_{\beta(m)}\{\}$ des dem natürlichen Logarithmus der ursprünglichen Wahrscheinlichkeitsdichtefunktion $f(\underline{r}|\hat{\Phi}^{(n-1)}, |c(k)| = \beta(m))$ entspricht.

$$\Lambda(\Phi, \hat{\Phi}^{(n-1)}) = E_{\beta(m)}\left\{\ln\left(f(\underline{r} \mid \Phi, |c(k)| = \beta(m))\right) \mid \underline{r}, \hat{\Phi}^{(n-1)}\right\}$$

$$(50)$$

Die Wahrscheinlichkeitsdichtefunktion $\Lambda(\underline{r}|\hat{\Phi}^{(n-1)}, |c(k)| = \beta(m))$ lässt sich gemäß Gleichung (51) ausgehend von Gleichung (51) unter Verwendung von Gleichung (47) und unter Einführung der Hilfsgrößen L gemäß Gleichung (52), der Hilfsgröße $\rho_k^{(n-1)}$ im Iterationsschritt $n$-1 gemäß Gleichung (53), der Hilfsgröße $A^{(n-1)}$ im Iterationsschritt $n$-1 gemäß Gleichung (54), und der Hilfsgröße $\alpha_{k,m}$ gemäß Gleichung (55) ermitteln.

$$\Lambda(\widetilde{\Phi}, \widehat{\Phi}^{(n-1)}) = \sum_{k=0}^{K-1}\sum_{m=0}^{M-1} p_{k,m}^{(n-1)} \cdot$$

$$\left[ \log\left(2 \cdot |r_k|\right) - \log\left(N_0\right) - \frac{|r_k|^2}{N_0} - \frac{S \cdot \beta(m)^2}{N_0} + \log I_0\left(\frac{2 \cdot \sqrt{S} \cdot \beta(m) \cdot |r_k|}{N_0}\right) \right] =$$

$$\sum_{k=0}^{K-1} \log\left(2 \cdot |r_k|\right) - K \cdot \log\left(N_0\right) - \frac{K \cdot L}{N_0} - \frac{K \cdot S \cdot A^{(n-1)}}{N_0} + \sum_{k=0}^{K-1}\sum_{m=0}^{M-1} p_{k,m}^{(n-1)} \cdot \log I_0\left(\frac{2 \cdot \sqrt{S} \cdot \alpha^{(n-1)}}{N_0}\right)$$

$$(51)$$

$$L = \frac{1}{K} \cdot \sum_{k=0}^{K-1} |r_k|^2 \qquad (52)$$

$$\rho_k^{(n-1)} = \sum_{m=0}^{M-1} \beta(m)^2 \cdot p_{k,m}^{(n-1)} \qquad (53)$$

$$A^{(n-1)} = \frac{1}{K} \sum_{k=0}^{K-1} \rho_k^{(n-1)} \qquad (54)$$

$$\alpha_{k,m} = |r_k| \cdot \beta(m) \qquad (55)$$

Der gesuchte Vektor $\Phi = \begin{bmatrix} \sqrt{S} & N_0 \end{bmatrix}$ für die quadrierte Fadingamplitude $S$ und die Rauschleistung $N_0$ ergibt sich unter Anwendung des Expectation-Maximization-Approaches gemäß Gleichung (56).

$$\widehat{\Phi}^{(n)} = \arg\max_{\widetilde{\Phi}} \left\{ \Lambda(\widetilde{\Phi}, \widehat{\Phi}^{(n-1)}) \right\} \qquad (56)$$

Die Ableitungen der Wahrscheinlichkeitsdichtefunktion $\Lambda(\widetilde{\Phi}, \hat{\Phi}^{(n-1)})$ nach den gesuchten Elementen $N_0$ und $\sqrt{S}$ des Vektors $\Phi$ ergeben sich im Sinne des Maximum-Likelihood-Ansatzes gemäß Gleichung (57) und (58) mit der Hilfsgröße $\Psi(x)$, die sich gemäß Gleichung (25) aus dem Quotient der modifizierten Besselfunktion $I_1(.)$ erster Gattung und erster Ordnung und der modifizierten Besselfunktion $I_0(.)$ erster Gattung und nullter Ordnung berechnen lässt.

$$\frac{\partial \Lambda(\underline{r} | \widehat{\Phi}^{(n-1)}, |c(k)| = \beta(m))}{\partial N_0} = -\frac{K}{N_0} + \frac{K \cdot L}{N_0^2} + \frac{K \cdot S \cdot A^{(n-1)}}{N_0^2} -$$

$$\sum_{k=0}^{K-1}\sum_{m=0}^{M-1} \frac{2 \cdot \sqrt{S} \cdot p_{k,m}^{(n-1)} \cdot \alpha^{(n-1)}}{N_0^2} \cdot \Psi\left(\frac{2 \cdot \sqrt{S} \cdot \alpha^{(n-1)}}{N_0}\right) = 0 \qquad (57)$$

$$\frac{\partial \Lambda(\underline{r} \mid \widehat{\Phi}^{(n-1)}, |c(k)| = \beta(m))}{\partial \sqrt{S}} = -\frac{2 \cdot K \cdot \sqrt{S} \cdot A^{(n-1)}}{N_0} + \sum_{k=0}^{K-1} \sum_{m=0}^{M-1} \frac{2 \cdot p_{k,m}^{(n-1)} \cdot \alpha^{(n-1)}}{N_0} \cdot \Psi\left(\frac{2 \cdot \sqrt{S} \cdot \alpha^{(n-1)}}{N_0}\right) = 0$$

$$(58)$$

Gleichung (58) kann mathematisch nach Gleichung (59) umgeformt werden.

$$\frac{\sqrt{S}}{N_0} \sum_{k=0}^{K-1} \sum_{m=0}^{M-1} \frac{2 \cdot p_{k,m}^{(n-1)} \cdot \alpha^{(n-1)}}{N_0} \cdot \Psi\left(\frac{2 \cdot \sqrt{S} \cdot \alpha^{(n-1)}}{N_0}\right) = \frac{\sqrt{S}}{N_0} \cdot \frac{2 \cdot K \cdot \sqrt{S} \cdot A^{(n-1)}}{N_0}$$

$$(59)$$

Der linksseitige Term in Gleichung (59) entspricht dem letzten Term auf der linken Gleichungsseite von Gleichung (57), so dass der rechtsseitige Term von Gleichung (59) diesen ersetzen kann und somit Gleichung (60) entsteht.

$$-\frac{K}{N_0} + \frac{K \cdot L}{N_0^2} + \frac{K \cdot S \cdot A^{(n-1)}}{N_0^2} - \frac{2 \cdot K \cdot S \cdot A^{(n-1)}}{N_0^2} = 0 \qquad (60)$$

Durch mathematische Umformung von Gleichung (60) gelangt man zu Gleichung (61).

$$N_0 = L - S \cdot A^{(n-1)} \qquad (61)$$

Den mathematischen Term für $N_0$ aus Gleichung (61) in Gleichung (58) eingesetzt, ergibt Gleichung (62).

$$\sqrt{S} = \frac{1}{K \cdot A^{(n-1)}} \cdot \sum_{k=0}^{K-1} \sum_{m=0}^{M-1} p_{k,m}^{(n-1)} \cdot \alpha^{(n-1)} \cdot \Psi\left(\frac{2 \cdot \sqrt{S} \cdot \alpha^{(n-1)}}{L - S \cdot A^{(n-1)}}\right) \qquad (62)$$

Gleichung (62) stellt eine nichtlineare Gleichung dar, die geschlossen analytisch nicht lösbar ist. Erfindungsgemäß wird die Hilfsfunktion $\Psi(x)$ durch eine Näherung gemäß Gleichung (30) approximiert. Mit der Näherung der Hilfsfunktion $\Psi(x)$ gemäß Gleichung (30) lässt sich Gleichung (62) mathematisch umformen nach Gleichung (63), indem die Hilfsgrößen $\eta_k^{(n-1)}$ und $C^{(n-1)}$ im Iterationsschritt $n$-1 gemäß Gleichung (64) und (65) eingeführt werden und die Tatsache ausgenutzt wird, dass die Summe der bedingten Wahrscheinlichkeiten $\sum_{m=0}^{M-1} p_{k,m}^{(n-1)}$ über alle Symbolamplituden $|\beta(m)|$ des Symbolalphabets mit m=0,1,..,M-1 genau 1 ergibt.

$$\sqrt{S} = \frac{1}{K \cdot A^{(n-1)}} \cdot \sum_{k=0}^{K-1} \sum_{m=0}^{M-1} p_{k,m}^{(n-1)} \cdot \alpha^{(n-1)} \cdot \left(1 - \frac{a \cdot \left(L - S \cdot A^{(n-1)}\right)}{2 \cdot \sqrt{S} \cdot \alpha^{(n-1)}}\right) =$$

$$= \frac{C^{(n-1)}}{A^{(n-1)}} - \frac{a \cdot \left(L - S \cdot A^{(n-1)}\right)}{2 \cdot \sqrt{S} \cdot A^{(n-1)}} \qquad (63)$$

$$\eta_k^{(n-1)} = \sum_{m=0}^{M-1} \beta(m) \cdot p_{k,m}^{(n-1)} \qquad (64)$$

$$C^{(n-1)} = \frac{1}{K} \cdot \sum_{k=0}^{K-1} \eta_k^{(n-1)} \cdot |r_k| \qquad (65)$$

Gleichung (63) ergibt mathematisch umgeformt die quadratische Gleichung (66), die geschlossen analytisch lösbar ist und den Schätzwert $\widehat{\sqrt{S}}$ für die gesuchte Größe $\sqrt{S}$ gemäß Gleichung (67) liefert.

$$(2-a) \cdot A^{(n-1)} \cdot S - 2 \cdot C^{(n-1)} \cdot \sqrt{S} + a \cdot L = 0 \qquad (66)$$

$$\widehat{\sqrt{S}}^{(n)} = \frac{2 \cdot C^{(n-1)} + \sqrt{4 \cdot \left[ C^{(n-1)} \right]^2 - 4 \cdot (2-a) \cdot a \cdot A^{(n-1)} \cdot L}}{2 \cdot (2-a) \cdot A^{(n-1)}} \qquad (67)$$

Ausgehend von Gleichung (61) ergibt sich der Schätzwert $\hat{N}_0$ für die Rauschleistung $N_0$ somit gemäß Gleichung (68).

$$\widehat{N}_0^{(n)} = L - \left[ \widehat{\sqrt{S}}^{(n)} \right]^2 \cdot A^{(n-1)} \qquad (68)$$

Da für die Berechnung der Hilfsgrößen $A^{(n-1)}$ und $C^{(n-1)}$ im vorherigen Iterationsschritt $n$-1 gemäß Gleichung (54) und (65) und damit auch für die Ermittlung des Schätzwerts $\widehat{\sqrt{S}}^{(n)}$ der gesuchten Größe $\sqrt{S}$ im Iterationsschritt $n$ gemäß Gleichung (71) und des Schätzwerts $\hat{N}_0^{(n)}$ für die Rauschleistung $N_0$ im Iterationsschritt n gemäß Gleichung (67) die bedingte Wahrscheinlichkeit $p_{k,m}^{(n-1)} = \Pr\{|c(k)| = \beta(m)|\hat{\Phi}^{(n-1)},|r_k|\}$ im Iterationsschritt $n$-1 benötigt wird, muss diese vor Ermittlung der Schätzwerte $\widehat{\sqrt{S}}^{(n)}$ und $\hat{N}_0^{(n)}$ bestimmt werden. Die bedingte Wahrscheinlichkeit $p_{k,m}^{(n-1)} = \Pr\{|c(k)| = \beta(m)|\hat{\Phi}^{(n-1)},|r_k|\}$ ergibt sich gemäß Gleichung (69) unter Anwendung der Bayes-Regel.

$$p_{k,m}^{(n)} = \Pr\left( |c(k)| = \beta(m) | \widehat{\Phi}^{(n)}, |r_k| \right) = \frac{f(|r_k| | \widehat{\Phi}^{(n)}, |c(k)| = \beta(m)) \cdot \Pr(|c(k)| = \beta(m) | \widehat{\Phi}^{(n)})}{f(|r_k| | \widehat{\Phi}^{(n)})}$$

$$(69)$$

Hierbei kann die bedingte Wahrscheinlichkeit $\Pr(|c(k)| = \beta(m)|\hat{\Phi}^{(n)})$ in Gleichung (69) durch die unbedingte Wahrscheinlichkeit $\Pr(|c(k)| = \beta(m))$ ersetzt werden, da die Wahrscheinlichkeit $\Pr(|c(k)| = \beta(m)|\hat{\Phi}^{(n)})$ vom Signal-Rausch-Abstand $\Phi$ unabhängig ist.. De bedingte Wahrscheinlichkeitsdichtefunktion $f(|r_k||\hat{\Phi}^{(n)})$ in Gleichung (69) ergibt sich gemäß Gleichung (70) aus der Mittelung der bedingten Wahrscheinlichkeitsdichtefunktion $f(|r_k|,|c(k)| = \beta(m)|\hat{\Phi}^{(n)})$ über alle Symbolamplituden $\beta(m)$ des Symbolalphabets, welche sich wiederum gemäß der Stochastik aus dem Produkt der bedingten Wahrscheinlichkeitsdichtefunktion $f(|r_k||\hat{\Phi}^{(n)},d(k) = \alpha(m))$ und der bedingten Wahrscheinlichkeit $\Pr(|c(k)| = \beta(m)|\hat{\Phi}^{(n)})$ zusammensetzt.

$$f(\,|\,r_k\,|\,\|\,\widehat{\Phi}^{(n)}) = \sum_{m=0}^{M-1} f(\,|\,r_k\,|\,,\,|\,c(k)\,|= \beta(m)\,|\,\widehat{\Phi}^{(n)}) =$$

$$= \sum_{m=0}^{M-1} f\left(\,|\,r_k\,|\,\|\,\widehat{\Phi}^{(n)},\,|\,c(k)\,|= \beta(m)\right) \cdot \Pr\left\{\,|\,c(k)\,|= \beta(m)\,|\,\widehat{\Phi}^{(n)}\right\}$$

$$(70)$$

. Somit ergibt sich für die bedingte Wahrscheinlichkeit $p_{k,m}^{(n)}$ die mathematische Beziehung in Gleichung (71), die einen Normierungsfaktor $\mu_k^{(n)}$ gemäß Gleichung (72) aufweist.

$$p_{k,m}^{(n)} = \mu_k^{(n)} \cdot \Pr(|c(k)| = \beta(m)) \cdot \exp\left[-\frac{\left[\widehat{\sqrt{s}}^{\,2}\right]^{(n)} \cdot \beta(m)^2}{\widehat{N}_0^{(n)}}\right] \cdot I_0\left(\frac{2 \cdot \widehat{\sqrt{s}}^{(n)} \cdot \alpha_{k,m}}{\widehat{N}_0^{(n)}}\right)$$

$$(71)$$

$$\mu_k^{(n)} = \frac{1}{\sum_{m=0}^{M-1} \Pr(|c(k)| = \beta(m)) \cdot \exp\left[-\dfrac{\left[\widehat{\sqrt{s}}^{\,2}\right]^{(n)} \cdot \beta(m)^2}{\widehat{N}_0^{(n)}}\right] \cdot I_0\left(\dfrac{2 \cdot \widehat{\sqrt{s}}^{(n)} \cdot \alpha_{k,m}}{\widehat{N}_0^{(n)}}\right)}$$

$$(72)$$

Anhand dieser mathematischen Grundlagen werden im folgenden die erfindungsgemäßen Verfahren und die zugehörigen erfindungsgemäßen Vorrichtungen erläutert:

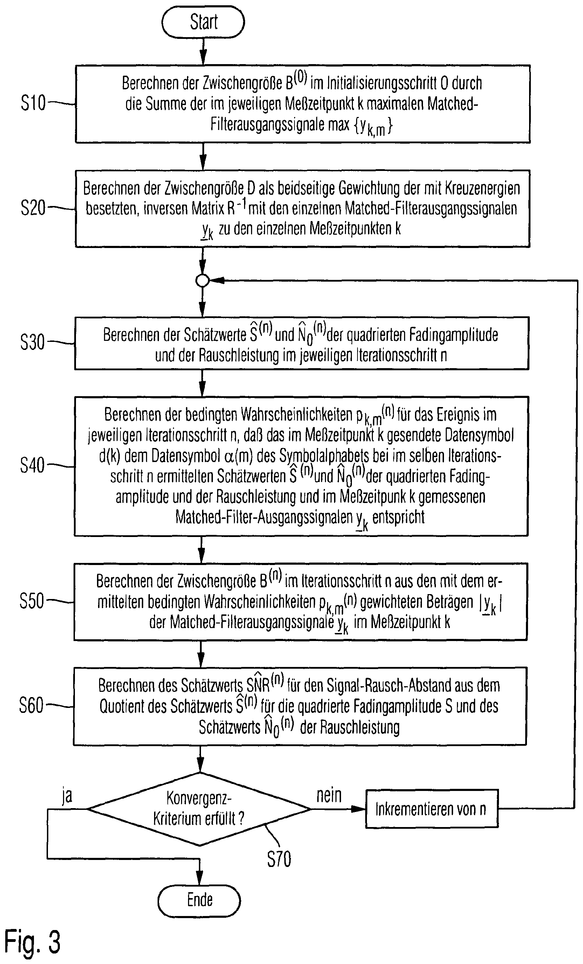

Im ersten Verfahrensschritt S10 des erfindungsgemäßen Verfahrens zur Ermittlung eines Schätzwerts für einen Signal-Rausch-Abstand eines nichtlinear phasen- oder frequenzmodulierten Empfangssignals wird gemäß dem Flussdiagramm in Fig. 3 die Zwischengröße $B^{(0)}$ in der Initialisierungsphase im Iterationsschritt 0 gemäß Gleichung (40) ermittelt.

Hierbei wird die Zwischengröße $B^{(0)}$ im Iterationsschritt 0 im Gegensatz zur Berechnung der Zwischengröße $B^{(n-1)}$ in allen folgenden Iterationsschritten 1,2,3,.. nicht gemäß der mathematischen Beziehung in Gleichung (33) berechnet, da die a-priori-Wahrscheinlichkeit $p_{k,m}^{(0)}$ im Iterationsschritt 0 ($n$=1) nicht vorliegt. Stattdessen wird für die Zwischengröße $B^{(0)}$ eine Näherung ermittelt, die dem Mittelwert der an den Ausgängen der einzelnen Matched-Filter $2_0, 2_1, ..., 2_{M-1}$ gemäß Fig. 1 in allen Meßzeitpunkten $k = 0, 1, ..., K - 1$ jeweils maximal gemessenen Signalamplituden $\max\{|y_{k,m}|, n = 0, 1, .., M - 1\}$ entspricht. Die einzelnen Matched-Filter $2_0, 2_0, ..., 2_{M-1}$ werden hierbei gemäß Fig. 1 mit dem in einem Mischer 1 demodulierten Empfangssignal $r_{d(k)}(t)$ gespeist.

Im nächsten Verfahrensschritt S20 wird gemäß Gleichung (22) die Zwischengröße D ermittelt, die sich aus der über alle Meßzeitpunkte $k = 0, 1, ..., K - 1$ jeweils durchgeführten Mittelung der beidseitig mit den im jeweiligen Meßzeitpunkt $k$ jeweils gemessenen Matched-Filter-Ausgangssignalen $y_k$ gewichteten, inversen Matrix $R^{-1}$ der mit Kreuzenergie-Termen $\rho_{o,m}$ belegten Matrix R ergibt. Die Kreuzenergie-Terme $\rho_{o,m}$ stellen dabei gemäß Gleichung (7) und (11) jeweils die multiplikative Verknüpfung der komplexen Hüllkurve des Sendesignals $s_o(t)$ eines von insgesamt $M$ möglichen Datensymbolen des verwendeten Symbolalphabets mit der komplexen Hüllkurve der Impulsantwort $s_m(t)^*$ eines der insgesamt $M$ Matched-Filter $2_0, 2_1, ..., 2_{M-1}$ dar. Die Matrix R mit ihren Kreuzenergie-Termen $\rho_{o,m}$ beinhalt dabei für jede Kombination eines gesendeten Datensymbols und eines Matched-Filters den zugehörigen Übereinstimmungsgrad zwischen den zugehörigen komplexen Einhüllenden.

Im nächsten Verfahrensschritt S30 werden der Schätzwert $\widehat{\sqrt{s}}^{(n)}$ der Fadingamplitude $\sqrt{s}$ für den Iterati-

onsschritt *n*=1 gemäß Gleichung (34) aus den in den ersten beiden Verfahrensschritten S10 und S20 ermittelten Zwischengrößen $B^{(0)}$ und *D* und einem frei wählbaren Anpaßfaktor *a* ermittelt. Zusätzlich wird in Verfahrensschritt S30 mit dem somit ermittelten Schätzwert $\widetilde{\sqrt{S}}^{(n)}$ der Fadingamplitude $\sqrt{S}$ und der Zwischengröße D der Schätzwert $\hat{N}_0^{(n)}$ für die Rauschleistung $N_0$ für den Iterationsschritt *n* = 1 gemäß Gleichung (35) berechnet.

Im nächsten Verfahrensschritt S40 wird für jeden Meßzeitpunkt *k* = 0,1,...,*K* - 1 des Meßintervalls *K* und für jedes Datensymbol *m* = 0,1,...,*M* - 1 des *M* -mächtigen Symbolalphabets die zugehörige bedingte a-posteriori-Wahrscheinlichkeit $p_{k,m}^{(n)}$ für das Ereignis im Iterationsschritt *n* = 1, dass das im Meßzeitpunkt *k* gesendete Datensymbol *d*(*k*) dem Datensymbol $\alpha$(*m*) des Symbolalphabets bei im selben Iterationsschritt *n* = 1 ermittelten Schätzwerten $\widetilde{\sqrt{S}}^{(n)}$ und $\hat{N}_0^{(n)}$ für die Fadingamplitude $\sqrt{S}$ und für die Rauschleistung $N_0$ und bei im Meßzeitpunkt *k* gemessenen Matched-Filter-Ausgangssignalamplituden $|\underline{y}_k|$ entspricht, gemäß Gleichung (38) berechnet. Die hierbei zu berechnende modifizierte Besselfunktion $I_0(x)$ erster Gattung und nullter Ordnung wird zum Beispiel über in einem internen Speicher (Look-Up-Table) abgelegte Funktionswerte für zugehörige Argumente in einem bestimmten Werteraster ermittelt. Das erfindungsgemäße Verfahren berechnet hierzu den Wert des Terms

$$\frac{2\sqrt{S}^{(n)} \cdot |y_{k,m}|}{N_0^{(n)}}$$

und ermittelt den nächst gelegenen Argumentwert in der Look-Up-Table.

Die ebenfalls für die Berechnung der bedingten a-posteriori-Wahrscheinlichkeit $p_{k,m}^{(n)}$ benötigte Wahrscheinlichkeit Pr(*d*(*k*) = $\alpha$(*m*)) für das Ereignis, dass das im Meßzeitpunkt *k* gesendete Datensymbol *d*(*k*) dem Datensymbol $\alpha$(*m*) des Symbolalphabets entspricht, kann im ersten Iterationsschritt als a-priori-Wahrscheinlichkeit vorher ermittelt werden und in einem internen Speicher des Schätzers 3 für den Signal-Rausch-Abstand abgelegt werden oder in nachfolgenden Iterationsschritten als a-posteriori-Wahrscheinlichkeit von einem dem Schätzer 3 nachfolgenden Dekodierer 4 geliefert werden.

Jede derart ermittelte, bedingte a-posteriori-Wahrscheinlichkeit $p_{k,m}^{(n)}$ enthält einen Faktor $\mu_k^{(n)}$, der gemäß Gleichung (39) berechnet wird.

Im nächsten Verfahrensschritt S50 wird die Zwischengröße $B^{(1)}$ im Iterationsschritt 1 gemäß Gleichung (33) aus den im Meßzeitpunkt *k* gemessenen Matched-Filterausgangssignalamplituden $|\underline{y}_k|$ und den für jedes im Meßzeitpunkt *k* gesendete Datensymbol *d*(*k*) und jedes Datensymbol $\alpha$(*m*) des Symbolalphabets jeweils berechneten bedingten a-posteriori-Wahrscheinlichkeit $p_{k,m}^{(1)}$ im Iterationsschritt 1 berechnet.

Im nächsten Verfahrensschritt S60 wird der Schätzwert $\widetilde{SNR}^{(1)}$ für den Signal-Rausch-Abstand gemäß Gleichung (41) als Quotient des Schätzwerts $\hat{S}^{(1)}$ im Iterationsschritt 1 für die quadrierte Fadingamplitude *S* und des Schätzwerts $\hat{N}_0^{(1)}$ im Iterationsschritt 1 für die Rauschleistung $N_0$ berechnet.

Im nächsten Verfahrensschritt S70 wird überprüft, ob ein bestimmtes vorher definiertes Konvergenzkriterium für die Iteration erfüllt ist. Als Konvergenzkriterium kann beispielsweise die Änderung des im aktuellen Iterationsschritt *n* ermittelten Schätzwert $\widetilde{SNR}^{(n)}$ für den Signal-Rausch-Abstand gegenüber dem im vorherigen Iterationsschritt *n*-1 ermittelten Schätzwert $\widetilde{SNR}^{(n-1)}$ für den Signal-Rausch-Abstand herangezogen werden, die bei Unterschreiten eines vorher definierten unteren Schwellwerts die Iteration abbricht.

Bei Abbruch der Iteration ist das erfindungsgemäße Verfahren zur Ermittlung eines Schätzwerts für einen Signal-Rausch-Abstand eines nichtlinear phasen- oder frequenzmodulierten Empfangssignals beendet. Andernfalls wird der Iterationsindex n um 1 erhöht und die Iteration in Verfahrensschritt S30 mit der Berechnung des Schätzwerts $\widetilde{\sqrt{S}}^{(n+1)}$ der Fadingamplitude $\sqrt{S}$ und des Schätzwerts $\hat{N}_0^{(n+1)}$ für die Rauschleistung $N_0$ im nächsten Iterationsschritt *n*+1 fortgesetzt.

Im ersten Verfahrensschritt S100 des erfindungsgemäßen Verfahren zur Ermittlung eines Schätzwerts für einen Signal-Rausch-Abstand eines linear modulierten Empfangssignals wird für jede im jeweiligen Meßzeitpunkt *k* = 0,1,...,*K* - 1 gesendete Datensymbolamplitude $|c(k)|$ und für jede Symbolamplitude $\beta(m)$ $m = 0,1,...,M$ - 1 des Symbolalphabets die zugehörige bedingte Wahrscheinlichkeit $p_{k,m}^{(0)}$ im Iterationsschritt 0 für das Ereignis, dass die Amplitude $|c(k)|$ des im Meßzeitpunkt $k$ gesendeten Datensymbols $c(k)$ mit der Symbolamplitude $\beta(m)$ des Symbolalphabets übereinstimmt, durch die vorab ermittelbare a-priori-Wahrscheinlichkeit $\Pr(|c(k)| = \beta(m))$ bestimmt, dass die im Meßzeitpunkt $k$ gesendete Datensymbolamplitude $|c(k)|$ mit der Symbolamplitude $\beta(m)$ des Symbolalphabets übereinstimmt. Diese a-priori-Wahrscheinlichkeit $\Pr(|c(k)| = \beta(m))$ ist für ein linear moduliertes Empfangssignal, beispielsweise für eine 16QAM-Modulation, bekannt und damit bestimmbar.

Im nächsten Verfahrensschritt S110 wird die Zwischengröße $\alpha_{k,m}$ gemäß Gleichung (55) als Gewichtung der Amplitude $|r_k|$ des im Meßzeitpunkt $k$ gemessenen, im Mischer 1 gemäß Fig. 2 ins Basisband gemischten und in einem Matched-Filter 2' gefilterten Empfangssignals $r_k$ mit der Symbolamplitude $\beta(m)$ des verwendeten Symbolalphabets berechnet.

Außerdem wird in Verfahrensschritt S110 der Mittelwert $L$ über die Amplitudenquadrate $|r_k|^2$ des in jedem Meßzeitpunkt $k = 0,1,...,K$ - 1 gemessenen Empfangssignals $r_k$ gemäß Gleichung (52) ermittelt.

Im nächsten Verfahrensschritt S120 wird gemäß Gleichung (64) im Iterationsschritt 0 ($n = 1$) für alle Meßzeitpunkte $k = 0,1,...,K$ - 1 der zugehörige Mittelwert $\eta_k^{(n-1)}$ über alle Symbolamplituden $\beta(m)$ des Symbolalphabets berechnet, die jeweils mit der zugehörigen, im Iterationsschritt 0 ($n = 1$) ermittelten bedingten Wahrscheinlichkeit $p_{k,m}^{(n-1)}$, dass die Amplitude $|c(k)|$ des im Meßzeitpunkt $k$ gesendeten Datensymbols $c(k)$ mit der Symbolamplitude $\beta(m)$ des Symbolalphabets übereinstimmt, gewichtet werden.

Anschließend wird gemäß Gleichung (65) im Iterationsschritt 0 ($n=1$) der Mittelwert $C^{(n-1)}$ über alle in den einzelnen Meßzeitpunkten $k = 0,1,...,K$ - 1 gemäß Gleichung (64) ermittelten Mittelwerte $\eta_k^{(n-1)}$ berechnet, die jeweils mit der zugehörigen Amplitude $|r_k|$ des Empfangssignals $r_k$ gewichtet werden.

Außerdem wird in Verfahrensschritt S120 gemäß Gleichung (53) im Iterationsschritt 0 ($n=1$) für alle Meßzeitpunkte $k = 0,1,...,K$ - 1 der zugehörige Mittelwert $\rho_k^{(n-1)}$ über alle Symbolamplitudenquadrate $\beta(m)^2$ des Symbolalphabets berechnet, die jeweils mit der zugehörigen, im Iterationsschritt 0 ($n=1$) ermittelten bedingten Wahrscheinlichkeit $p_{k,m}^{(n-1)}$, dass die Amplitude $|c(k)|$ des im Meßzeitpunkt $k$ gesendeten Datensymbols $c(k)$ mit der Symbolamplitude $\beta(m)$ des Symbolalphabets übereinstimmt, gewichtet werden. Anschließend wird gemäß Gleichung (54) im Iterationsschritt 0 ($n=1$) der Mittelwert $A^{(n-1)}$ über alle in den einzelnen Meßzeitpunkten $k = 0,1,...,K$ - 1 gemäß Gleichung (53) ermittelten quadratischen Mittelwerte $\rho_k^{(n-1)}$ berechnet.

Im nächsten Verfahrensschritt S130 werden der Schätzwert $\widetilde{\sqrt{S}}^{(n)}$ der Fadingamplitude $\sqrt{S}$ für den Iterationsschritt 0 $n=1$ gemäß Gleichung (67) aus den im vorherigen Verfahrensschritt S120 für den Iterationsschritt 0 $n=1$ ermittelten Zwischengrößen $A^{(n-1)}$ und $C^{(n-1)}$, dem im Verfahrensschritt S110 ermittelten Mittelwert $L$ über die Amplitudenquadrate $|r_k|^2$ des in jedem Meßzeitpunkt $k = 0,1,...,K$ - 1 gemessenen Empfangssignals $r_k$ und einem frei wählbaren Anpaßfaktor $a$ berechnet. Zusätzlich wird in Verfahrensschritt S130 mit dem somit ermittelten Schätzwert $\widetilde{\sqrt{S}}^{(n)}$ der Fadingamplitude $\sqrt{S}$, der im vorherigen Verfahrensschritt S120 für den Iterationsschritt 0 $n = 1$ ermittelten Zwischengrößen $A^{(n-1)}$ und dem im Verfahrensschritt S110 ermittelten Mittelwert $L$ über die Amplitudenquadrate $|r_k|^2$ des in jedem Meßzeitpunkt $k = 0,1,...,K$ - 1 gemessenen Empfangssignals $r_k$ der Schätzwert $\hat{N}_0^{(n)}$ für die Rauschleistung $N_0$ für den Iterationsschritt 0 $n=1$ gemäß Gleichung (68) berechnet.

Im nächsten Verfahrensschritt S140 wird für jeden Meßzeitpunkt $k = 0,1,...,K$ - 1 des Meßintervalls $K$ und für jeden möglichen Symbolamplitudenwert $\beta(m)$ $m = 0,1,...,M$ - 1 des Symbolalphabets die zugehörige bedingte a-posteriori-Wahrscheinlichkeit $p_{k,m}^{(n)}$ für das Ereignis im Iterationsschritt $n = 1$, dass die Datensymbolamplitude $|c(k)|$ des im Meßzeitpunkt $k$ gesendeten Datensymbols $c(k)$ der Symbolamplitudenwert $\beta(m)$ des Symbolalphabets bei im selben Iterationsschritt $n = 1$ ermittelten Schätzwerten $\widetilde{\sqrt{S}}^{(n)}$ und $\hat{N}_0^{(n)}$ für die Fadingamplitude $\sqrt{S}$ und für die Rauschleistung $N_0$ und bei einer Amplitude $|r_k|$ des im Meßzeitpunkt $k$ gemessenen Empfangssignals $r_k$ entspricht, gemäß Gleichung (71) berechnet.

Die hierbei zu berechnende modifizierte Besselfunktion $I_0(x)$ erster Gattung und nullter Ordnung wird ebenfalls zum Beispiel über in einem internen Speicher (Look-Up-Table) abgelegte Funktionswerte für zugehörige Argumente in einem bestimmten Werteraster ermittelt.

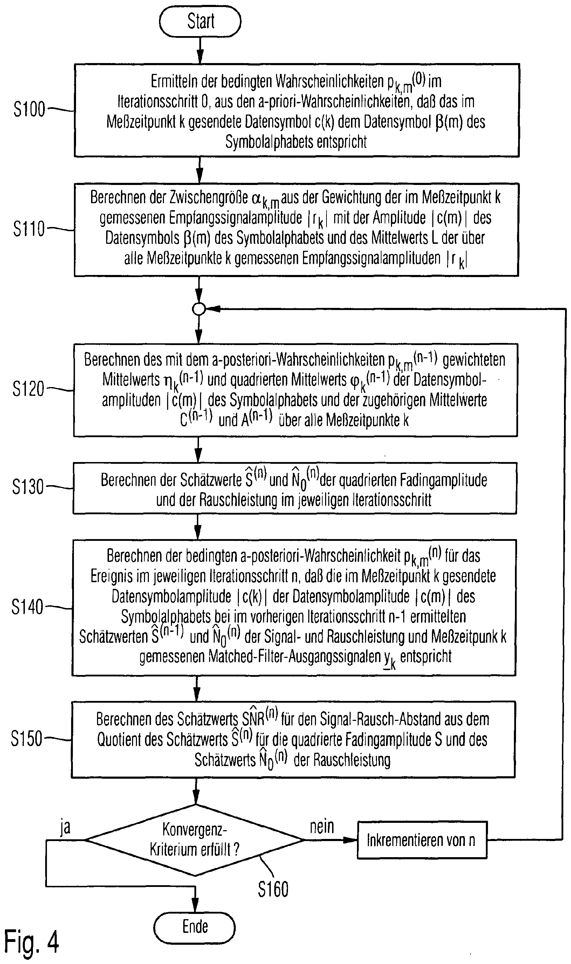

Die ebenfalls für die Berechnung der bedingten a-posteriori-Wahrscheinlichkeit $p_{k,m}^{(n)}$ benötigte Wahrscheinlichkeit $\Pr(|c(k)| = \beta(m))$ für das Ereignis, dass die im Meßzeitpunkt $k$ gesendete Datensymbolamplitude $|c(k)|$ der Symbolamplitude $\beta(m)$ des Symbolalphabets entspricht, ist für den ersten Iterationsschritt bereits im ersten Verfahrensschritt S100 als a-priori-Wahrscheinlichkeit ermittelt worden und in einem internen Speicher des Schätzers für den Signal-Rausch-Abstand 3' gemäß Fig. 4 abgelegt und kann für alle nachfolgenden Iterationsschritte als a-posteriori-Wahrscheinlichkeit von einem dem Schätzer 3' nachfolgenden Dekodierer 4 geliefert werden.

Die hierbei ebenfalls benötigte Zwischengröße $\alpha_{k,m}$ ist im Verfahrensschritt S110 in der Initialisierung bereits berechnet worden und ebenfalls in einem internen Speicher des Schätzers für den Signal-Rausch-Abstand 3' abgelegt worden.Jede derart ermittelte, bedingte a-posteriori-Wahrscheinlichkeit $p_{k,m}^{(n)}$ enthält einen Faktor $\mu_k^{(n)}$, der gemäß Gleichung (72) berechnet wird.

Die folgenden Verfahrensschritte S150 und S160 entsprechen den Verfahrensschritten S60 und S70 des erfindungsgemäßen Verfahrens zur Ermittlung eines Schätzwerts für einen Signal-Rausch-Abstand einesnichtlinear phasen- oder frequenzmodulierten Empfangssignals gemäß Fig. 3.

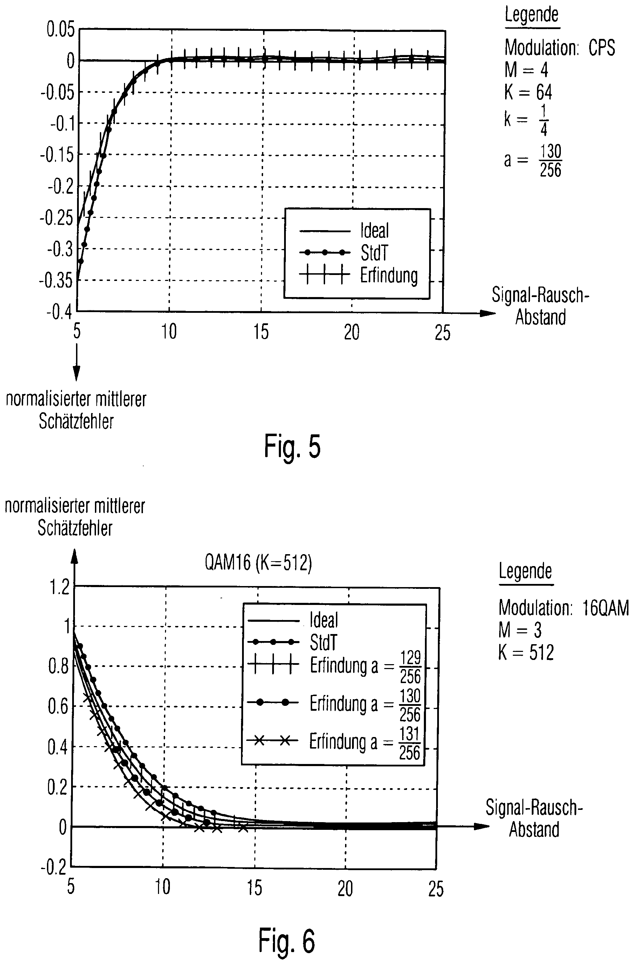

In Fig. 5 ist der normalisierte, mittlere Schätzfehler über dem Signal-Rausch-Abstand des erfindungsgemäßen Verfahrens bzw. der erfindungsgemäßen Vorrichtung zur Ermittlung eines Schätzwerts für einen Signal-Rausch-Abstand einesnichtlinear phasen- oder frequenzmodulierten Empfangssignals gegenüber dem Stand der Technik dargestellt. Zu erkennen ist insbesondere bei geringeren Werten des Signal-Rausch-Abstands der höhere Schätzfehlerwert nach dem Stand der Technik gegenüber der Erfindung.

In Fig. 6 ist der normalisierte, mittlere Schätzfehler über dem Signal-Rausch-Abstand des erfindungsgemäßen Verfahrens bzw. der erfindungsgemäßen Vorrichtung zur Ermittlung eines Schätzwerts für einen Signal-Rausch-Abstand eines linear modulierten Empfangssignals für verschiedene Werte des Anpaßfaktors $a$ gegenüber dem Stand der Technik dargestellt. Zu erkennen sind auch in diesem Fall die höheren Schätzfehlerwerte nach dem Stand der Technik gegenüber der Erfindung für alle Werte des Anpaßfaktors $a$.

Die Erfindung ist nicht auf die dargestellten Ausführungsformen der Erfindung beschränkt. Von der Erfindung sind auch andere, hier nicht dargestellte Modulationsarten sowie andere Übertragungskanäle außer AWGN-Kanäle, beispielsweise Flat-Fading-Kanäle, mit abgedeckt. Das Verfahren wird bevorzugt auf einem Computer oder einem digitalen Signalprozessor ausgeführt. Es lässt sich aber auch in Hardware z.B. auf einem FPGA realisieren.

## Patentansprüche

1. Verfahren zur Ermittlung eines Schätzwerts ($\hat{S}NR^{(n)}$) für einen Signal-Rausch-Abstand eines nichtlinear phasen- oder frequenzmodulierten Empfangssignals ($r_{FM}(t)$), das von einem Sendesignal ($s_{FM}(t)$) und einem Rauschsignal ($z_k(t)$) abhängig ist, durch iteratives Maximum-Likelihood-Schätzen eines Schätzwertes ($\hat{S}^{(n)}$) für die quadrierte Fading-Amplitude ($S$), eines Schätzwertes ($\hat{N}_0^{(n)}$) für die Rauschleistung ($N_0$) des Rauschsignals ($z_k(t)$) und von bedingten Wahrscheinlichkeiten ($p_{k,m}^{(n)}$) für die Übereinstimmung jedes in einem Zeitpunkt $k$ im Sendesignal ($s_{FM}(t)$) modulierten Datensymbols ($d(k)$) mit jedem Datensymbol ($\alpha(m)$) des verwendeten Symbolalphabets, bis ein als Quotient des Schätzwerts ($\hat{S}^{(n)}$) für die quadrierte Fading-Amplitude ($S$) und des Schätzwerts ($\hat{N}_0^{(n)}$) für die Rauschleistung ($N_0$) des Rauschsignals ($z_k(t)$) berechneter Schätzwert ($\hat{S}NR^{(n)}$) für den Signal-Rausch-Abstand einem definierten Konvergenzkriterium entspricht,
**dadurch gekennzeichnet,**
**dass** der Schätzwert ($\hat{S}^{(n)}$) für die quadrierte Fading-Amplitude ($S$) und der Schätzwert ($\hat{N}_0^{(n)}$) für die Rauschleistung ($N_0$) des Rauschsignals ($z_k(t)$) in einem Iterationsschritt $n$ mittels Maximierung einer Wahrscheinlichkeitsdichtefunktion $f(Y|\Phi)$ von Ausgangssignalen ($\underline{y}_0,..,\underline{y}_k,..,\underline{y}_{K-1}$) von M Matched-Filtern ($2_0,2_1,...,2_{M-1}$) ermittelt werden, die jeweils das nichtlinear phasen- oder frequenzmodulierte Empfangssignal ($r_{FM}(t)$) filtern, und ein beim Maximieren der Wahrscheinlichkeitsdichtefunktion $f(Y|\Phi)$ auftretender Quotient ($\Psi(x)$) aus einer modifizierten Besselfunktion 1-ter Gattung und 1-ter Ordnung ($I_1(x)$) und einer modifizierten Besselfunktion 1-ter Gattung und 0-ter Ordnung ($I_0(x)$) durch einen Näherungsterm $1 - \dfrac{a}{x}$ ersetzt wird, wobei $a$ ein einstellbarer Anpaßfaktor und $x$ ein Argument der beiden Besselfunktionen ($I_0(x)$, $I_1(x)$) ist.

2. Verfahren zur Ermittlung eines Schätzwerts für einen Signal-Rausch-Abstand nach Anspruch 1,
**dadurch gekennzeichnet,**
**dass** die Impulsantwort jedes Matched-Filters ($2_0,2_1,...,2_{M-1}$) jeweils von einer konjugiert-komplexen, zeitgespiegelten Einhüllenden ($s_{d(m)}^*(-t)$) eines Datensymbols ($\alpha(m)$) von insgesamt $M$ möglichen Datensymbolen ($\alpha(m)$) des Symbolalphabets im Sendesignal ($s_{FM}(t)$) abhängig ist.

3. Verfahren zur Ermittlung eines Schätzwerts für einen Signal-Rausch-Abstand nach Anspruch 1 oder 2,

**dadurch gekennzeichnet,**
**dass** eine Matrix ($R$) mit Matrixelemente ($\rho_{0,0},..,\rho_{o,m},...,\rho_{O-1,M-1}$) berechnet wird, die jeweils mögliche Kreuzenergien zwischen der komplexen Einhüllenden ($s_{\alpha(o)}(t)$) eines Datensymbols ($\alpha(o)$) des Symbolalphabets im Sendesignal ($s_{FM}(t)$) mit der konjugiert-komplexen Einhüllenden ($s_{\alpha(m)}{}^{*}(t)$) eines anderen Datensymbols ($\alpha(m)$) des Symbolalphabets im Sendesignal ($s_{FM}(t)$) darstellen.

4. Verfahren zur Ermittlung eines Schätzwerts für einen Signal-Rausch-Abstand nach Anspruch 3,
**dadurch gekennzeichnet,**
**dass** der Schätzwert ($\hat{S}^{(n)}$) für die quadrierte Fading-Amplitude ($S$) und der Schätzwert ($\hat{N}_0{}^{(n)}$) für die Rauschleistung ($N_0$) des Rauschsignals ($z_k(t)$) in jeder Iterationsstufe ($n$) jeweils aus den Matrixelementen ($\rho_{0,0},...,\rho_{o,m},...,\rho_{O-1,M-1}$) der mit Kreuzenergien besetzten Matrix ($R$) und jedem in jeweils einem Zeitpunkt ($k{\cdot}T_S$) abgetasteten Ausgangssignal ($\underline{y}_0,..,\underline{y}_k,..,\underline{y}_{K-1}$) jedes Matched-Filters ($2_0,2_1,...,2_{M-1}$) und den mit den in einzelnen Meßzeitpunkten ($k{\cdot}T_S$) gemessenen Amplituden ($|\underline{y}_{k,m}|$) der Ausgangssignale ($y_{k,m}$) der Matched-Filter ($2_0,2_1,...,2_{M-1}$) gewichteten bedingten Wahrscheinlichkeiten ($p_{k,m}{}^{(n)}$) für die Übereinstimmung des in jedem Meßzeitpunkt ($k{\cdot}T_S$) gesendeten Datensymbols ($d(k)$) mit jedem Datensymbol ($\alpha(m)$) des Symbolalphabets berechnet wird.

5. Verfahren zur Ermittlung eines Schätzwerts für einen Signal-Rausch-Abstand nach Anspruch 4,
**dadurch gekennzeichnet,**
**dass** im ersten Iterationsschritt für die mit den zugehörigen bedingten Wahrscheinlichkeiten ($p_{k,m}{}^{(n)}$) jeweils gewichteten Amplituden ($|y_{k,m}|$) der Ausgangssignale ($y_{k,m}$) der einzelnen Matched-Filter ($2_0,2_1,...,2_{M-1}$) die in jedem Zeitpunkt ($k{\cdot}T_S$) jeweils maximale Amplitude ($|y_{k,m}|$) des Ausgangssignals ($y_{k,m}$) aller Matched-Filter ($2_0,2_1,...,2_{M-1}$) verwendet werden.

6. Verfahren zur Ermittlung eines Schätzwerts für einen Signal-Rausch-Abstand nach Anspruch 4,
**dadurch gekennzeichnet,**
**dass** in den folgenden Iterationsstufen ($n$) für die mit den zugehörigen bedingten Wahrscheinlichkeiten ($p_{k,m}{}^{(n)}$) jeweils gewichteten Amplituden ($|y_{k,m}|$) der Ausgangssignale ($y_{k,m}$) der einzelnen Matched-Filter ($2_0,2_1,...,2_{M-1}$) die mit den zugehörigen, im jeweils vorherigen Iterationsschritt $n$-1 ermittelten bedingten Wahrscheinlichkeiten ($p_{k,m}{}^{(n+1)}$) jeweils gewichteten Amplituden ($|y_{k,m}|$) der Ausgangssignale ($y_{k,m}$) der einzelnen Matched-Filter ($2_0,2_1,...,2_{M-1}$) verwendet werden.

7. Verfahren zur Ermittlung eines Schätzwerts für einen Signal-Rausch-Abstand nach einem der Ansprüche 1 bis 6,
**dadurch gekennzeichnet,**
**dass** die bedingte Wahrscheinlichkeit ($p_{k,m}{}^{(n)}$) für die Übereinstimmung des im jeweiligen Zeitpunkt ($k{\cdot}T_S$) gesendeten Datensymbols ($d(k)$) mit dem jeweiligen Datensymbol $\alpha(m)$ des Symbolalphabets bei gemessenen Ausgangssignalen ($\underline{y}_k$) der einzelnen Matched-Filter ($2_0,2_1,...,2_{M-1}$) in jeder Iterationsstufe ($n$) aus den in derselben Iterationsstufe ($n$) ermittelten Schätzwerten ($\tilde{S}^{(n)}$, $\hat{N}_0{}^{(n)}$) für die quadrierte Fading-Amplitude ($S$) und für die Rauschleistung ($N_0$) des Rauschsignals ($z_k(t)$) und dem Ausgangssignal ($y_{k,m}$) des jeweiligen Matched-Filters ($2_0,2_1,...,2_{M-1}$) und der unbedingten Wahrscheinlichkeit für die Übereinstimmung des im Meßzeitpunkt ($k{\cdot}T_S$) gesendeten Datensymbols ($d(k)$) mit dem modulierten Datensymbol $\alpha(m)$ des Symbolalphabets ermittelt wird.

8. Verfahren zur Ermittlung eines Schätzwerts ($\hat{S}NR^{(n)}$) für einen Signal-Rausch-Abstand eines linear modulierten Empfangssignals ($r_{LM}(t)$), das von einem Sendesignal ($s_{LM}(t)$) und einem Rauschsignal ($z_k(t)$) abhängig ist, durch iteratives Maximum-Likelihood-Schätzen eines Schätzwertes ($\hat{S}^{(n)}$) für die quadrierte Fading-Amplitude ($S$), eines Schätzwertes ($\hat{N}_0{}^{(n)}$) für die Rauschleistung ($N_0$) des Rauschsignals ($z_k(t)$) und von bedingten Wahrscheinlichkeiten ($p_{k,m}{}^{(n)}$ für die Übereinstimmung der Amplitude ($|c(k)|$) jedes in einem Zeitpunkt $k$ im Sendesignal ($s_{LM}(t)$) modulierten Datensymbols ($c(k)$) mit jedem Amplitudenwert ($\beta(m)$) des verwendeten Symbolalphabets, bis ein als Quotient des Schätzwerts ($\hat{S}^{(n)}$) für die quadrierte Fading-Amplitude ($S$) und des Schätzwerts ($\hat{N}_0{}^{(n)}$) für die Rauschleistung ($N_0$) des Rauschsignals ($z_k(t)$) berechneter Schätzwert ($\hat{S}NR^{(n)}$) für den Signal-Rausch-Abstand einem definierten Konvergenzkriterium entspricht,
**dadurch gekennzeichnet,**
**dass** der Schätzwert ($\hat{S}^{(n)}$) für die quadrierte Fading-Amplitude ($S$) und der Schätzwert ($\hat{N}_0{}^{(n)}$) für die Rauschleistung ($N_0$) des Rauschsignals ($z_k(t)$) in einem Iterationsschritt $n$ mittels Maximierung einer Wahrscheinlichkeitsdichtefunktion eines Ausgangssignals eines Matched-Filters ($2'$), dem des linear modulierte Empfangssignal ($r_{LM}(t)$) zugeführt wird, bestimmt werden und ein beim Maximieren der Wahrscheinlichkeitsdichtefunktion auftretender Quotient ($\Psi(x)$)

aus einer modifizierten Besselfunktion 1-ter Gattung und 1-ter Ordnung ($I_1(x)$) und einer modifizierten Besselfunktion 1-ter Gattung und 0-ter Ordnung ($I_0(x)$) durch einen Näherungsterm $1 - \dfrac{a}{x}$ ersetzt wird, wobei $a$ ein einstellbarer Anpaßfaktor und $x$ das Argument der beiden Besselfunktionen ($I_0(x)$, $I_1(x)$) ist.

9.  Verfahren zur Ermittlung eines Schätzwerts für einen Signal-Rausch-Abstand nach Anspruch 8,
    **dadurch gekennzeichnet,**
    **dass** der Schätzwert ($\hat{S}^{(n)}$) für die quadrierte Fading-Amplitude ($S$) und der Schätzwert ($\hat{N}_0^{(n)}$) für die Rauschleistung ($N_0$) des Rauschsignals mittels Maximierung einer Wahrscheinlichkeitsdichtefunktion $f(\underline{r}|\Phi)$ des Empfangssignals ($\underline{r}_k$) ermittelt werden.

10. Verfahren zur Ermittlung eines Schätzwerts für einen Signal-Rausch-Abstand nach Anspruch 9,
    **dadurch gekennzeichnet,**
    **dass** der Schätzwert ($\hat{S}^{(n)}$) für die quadrierte Fading-Amplitude ($S$) und der Schätzwert ($\hat{N}_0^{(n)}$) für die Rauschleistung ($N_0$) des Rauschsignals ($z_k(t)$) in jedem Iterationsschritt jeweils aus den quadrierten Amplituden ($|\underline{r}_k|$) des Empfangssignals ($\underline{r}_k$) in jedem Zeitpunkt ($k$), aus den quadrierten Symbolamplituden ($\beta(m)^2$) des Symbolalphabets, die jeweils mit jeder bedingten Wahrscheinlichkeit ($p_{k,m}^{(n)}$) für die Übereinstimmung der Amplitude ($|c(k)|^2$) des im jeweiligen Zeitpunkt ($k \cdot T_S$) gesendeten Datensymbols ($c(k)$) mit jeweils einer Symbolamplitude ($\beta(m)$) des Symbolalphabets bei bekannter Amplitude ($|\underline{r}_k|$) des Empfangssignal $\underline{r}_k$ im Zeitpunkt ($k \cdot T_S$) gewichtet sind, und aus allen Kombinationen der Amplitude ($|\underline{r}_k|$) des Empfangssignal ($\underline{r}_k$) in jeweiligen Zeitpunkt ($k \cdot T_S$) mit der jeweiligen Symbolamplitude ($\beta(m)$) des Symbolalphabets, die mit der zugehörigen bedingten Wahrscheinlichkeit ($p_{k,m}^{(n)}$) für die Übereinstimmung der Amplitude ($|c(k)|$) des im jeweiligen Zeitpunkt ($k \cdot T_S$) gesendeten Datensymbols ($c(k)$) mit dem jeweiligen Symbolamplitude ($\beta(m)$) des Symbolalphabets gewichtet sind, ermittelt wird.

11. Verfahren zur Ermittlung eines Schätzwerts für einen Signal-Rausch-Abstand nach Anspruch 10,
    **dadurch gekennzeichnet,**
    **dass** die in der ersten Iterationsstufe für die Schätzung der quadrierten Fading-Amplitude ($S$) und der Rauschleistung ($N_0$) des Rauschsignals ($z_k(t)$) benötigten bedingten Wahrscheinlichkeiten ($p_{k,m}^{(n)}$) die zugehörige unbedingten Wahrscheinlichkeiten sind.

12. Verfahren zur Ermittlung eines Schätzwerts für einen Signal-Rausch-Abstand nach Anspruch 10,
    **dadurch gekennzeichnet,**
    **dass** die in den folgenden Iterationsstufen ($n$) für die Schätzung der quadrierten Fading-Amplitude ($S$) und der Rauschleistung ($N_0$) des Rauschsignals ($z_k(t)$) benötigten bedingten Wahrscheinlichkeiten ($p_{k,m}^{(n)}$) die in der jeweils vorherigen Iterationsstufe ($n$-1) ermittelte bedingten Wahrscheinlichkeiten ($p_{k,m}^{(n-1)}$) sind.

13. Verfahren zur Ermittlung eines Schätzwerts für einen Signal-Rausch-Abstand nach einem der Ansprüche 8 bis 12,
    **dadurch gekennzeichnet,**
    **dass** die bedingte Wahrscheinlichkeit ($p_{k,m}^{(n)}$) für die Übereinstimmung der Amplitude ($|c(k)|$) des im jeweiligen Zeitpunkt ($k$) gesendeten Datensymbols ($c(k)$) mit einem Amplitudenwert ($\beta(m)$) des Symbolalphabets in jedem Iterationsschritt ($n$) aus den in selben Iterationsschritt ($n$) ermittelten Schätzwert ($\hat{S}^{(n)}$, $\hat{N}_0^{(n)}$) für die quadrierte Fading-Amplitude ($S$) und für die Rauschleistung ($N_0$) des Rauschsignals ($z_k(t)$) und quadrierten Symbolamplitudenwerten ($\beta(m)^2$) des Symbolalphabets und dem mit der Amplitude ($|r_k|$) des Empfangssignals ($r_k$) im jeweiligen Zeitpunkt ($k \cdot T_S$) gewichteten Symbolamplitudenwert ($\beta(m)$) des Symbolalphabets ermittelt wird.

14. Verfahren zur Ermittlung eines Schätzwerts für einen Signal-Rausch-Abstand nach einem der Ansprüche 4 bis 6 oder 10 bis 12,
    **dadurch gekennzeichnet,**
    **dass** in die Schätzung der quadrierten Fading-Amplitude ($S$) und der Rauschleistung ($N_0$) des Rauschsignals ($z_k(t)$) jeweils der einstellbare Anpaßfaktor $a$ eingeht.

15. Verfahren zur Ermittlung eines Schätzwerts für einen Signal-Rausch-Abstand nach Anspruch 7 oder 13,
    **dadurch gekennzeichnet,**
    **dass** in die Berechnung der bedingten Wahrscheinlichkeit ($p_{k,m}^{(n)}$) die zugehörige unbedingte Wahrscheinlichkeit eingeht.

**16.** Verfahren zur Ermittlung eines Schätzwerts für einen Signal-Rausch-Abstand nach Anspruch 15,
**dadurch gekennzeichnet,**
**dass** für die unbedingte Wahrscheinlichkeit ($p_{k,m}{}^{(n)}$) jeweils eine a-priori-Wahrscheinlichkeit verwendet wird.

**17.** Verfahren zur Ermittlung eines Schätzwerts für einen Signal-Rausch-Abstand nach Anspruch 15,
**dadurch gekennzeichnet,**
**dass** für die unbedingte Wahrscheinlichkeit ($p_{k,m}{}^{(n)}$) jeweils eine von einem Dekodierer (4) ermittelten a-posteriori-Wahrscheinlichkeit verwendet wird.

**18.** Vorrichtung zur Ermittlung eines Schätzwerts ($\hat{S}NR^{(n)}$) für einen Signal-Rausch-Abstand eines nichtlinear phasen- oder frequenzmodulierten Empfangssignals ($r_{FM}(t)$), das von einem Sendesignal ($s_{FM}(t)$) und einem weißen, Gauss-verteilten Rauschsignal ($z_k(t)$) abhängig ist, mit M Matched-Filtern ($2_0,2_1,...,2_{M-1}$) zur Filterung des Empfangssignals ($r_{FM}(t)$) und einem Schätzer (3), der nach einem Verfahren zur Ermittlung eines Schätzwerts ($\hat{S}NR^{(n)}$) für einen Signal-Rausch-Abstand eines nichtlinear phasen- oder frequenzmodulierten Empfangssignals ($r_{FM}(t)$) mit den Merkmalen eines der Ansprüche 1 bis 7 oder 14 bis 17 arbeitet.

**19.** Vorrichtung zur Ermittlung eines Schätzwerts ($\hat{S}NR^{(n)}$) für einen Signal-Rausch-Abstand eines linear modulierten Empfangssignals ($r_{LM}(t)$), das von einem Sendesignal ($s_{LM}(t)$) und einem weißen, Gauss-verteilten Rauschsignal ($z_k(t)$) abhängig ist, mit einem Matched-Filter (2') und einem Schätzer (3'), der nach einem Verfahren zur Ermittlung eines Schätzwerts ($\hat{S}NR^{(n)}$) für einen Signal-Rausch-Abstand eines linear modulierten Empfangssignals ($r_{LM}(t)$) mit den Merkmalen eines der Ansprüche 8 bis 13 oder 14 bis 17 arbeitet.

**20.** Digitales Speichermedium mit elektronisch auslesbaren Steuersignalen, welche derart mit einem programmierbaren Computer oder digitalen Signalprozessor zusammenwirken können, dass ein Verfahren nach einem der Ansprüche 1 bis 17 ausgeführt wird.

**21.** Computerprogramm mit Programmcode-Mitteln zur Durchführung eines Verfahrens nach einem der Ansprüche 1 bis 17, wenn das Computerprogramm in einem Computer oder einem digitalen Signalprozessor ausgeführt wird.

**Claims**

**1.** Method for determining an estimated value ($\hat{S}NR^{(n)}$) for a signal-to-noise ratio of a non-linearly phase-modulated or frequency-modulated received signal ($r_{FM}(t)$) which is dependent on a transmitted signal ($s_{FM}(t)$) and a noise signal ($z_k(t)$), by iterative maximum likelihood estimation of an estimated value ($\hat{S}^{(n)}$) for the squared fading amplitude (S), of an estimated value ($\hat{N}_0^{(n)}$) for the noise power ($N_0$) of the noise signal ($z_k(t)$) and conditional probabilities ($p_{k,m}{}^{(n)}$) for the matching of each data symbol ($d(k)$) modulated in a point in time $k$ in the transmitted signal ($s_{FM}(t)$) with each data symbol ($\alpha(m)$) of the symbol alphabet used, until an estimated value ($\hat{S}NR^{(n)}$) for the signal-to-noise ratio calculated as the quotient of the estimated value ($\hat{S}^{(n)}$) for the squared fading amplitude (S) and the estimated value ($\hat{N}_0^{(n)}$) for the noise power ($N_0$) of the noise signal ($z_k(t)$) corresponds to a defined convergence criterion,
**characterised in that**
the estimated value ($S^{(n)}$) for the squared fading amplitude (S) and the estimated value ($\hat{N}_0^{(n)}$) for the noise power ($N_0$) of the noise signal ($z_k(t)$) are determined in an iteration step $n$ by means of maximisation of a probability density function $f(Y|\Phi)$ of output signals ($\underline{y}_0,..,\underline{y}_k,..,\underline{y}_{K-1}$) of M matched filters ($2_0,2_1,...,2_{M-1}$) which each filter the non-linearly phase-modulated or frequency-modulated received signal ($r_{FM}(t)$), and a quotient ($\Psi(x)$) of a modified Bessel function of 1st genus and 1st order ($I_1(x)$) and a modified Bessel function of 1st genus and Oth order ($I_0(x)$) appearing during

the maximisation of the probability density function $f(Y|\Phi)$ is replaced by an approximate term $1-\dfrac{a}{x}$, in which $a$ is an adjustable matching factor and $x$ is an argument of the two Bessel functions ($I_0(x)$, $I_1(x)$).

**2.** Method for determining an estimated value for a signal-to-noise ratio according to claim 1,
**characterised in that**
the impulse response of each matched filter ($2_0,2_1,...,2_{M-1}$) is in each case dependent on a complex conjugate time-mirrored envelope ($s_{d(m)}{}^*(-t)$) of a data symbol ($\alpha(m)$) of a total of $M$ possible data symbols ($\alpha(m)$) of the symbol alphabet in the transmitted signal ($s_{FM}(t)$).

3.  Method for determining an estimated value for a signal-to-noise ratio according to claim 1 or 2, **characterised in that** a matrix ($R$) is calculated with matrix elements ($\rho_{0,0},...,\rho_{o,m},...,\rho_{O-1,M-1}$), which in each case represent possible cross energies between the complex envelope ($s_{\alpha(o)}(t)$) of a data symbol ($\alpha(o)$) of the symbol alphabet in the transmitted signal ($s_{FM}(t)$) with the complex conjugate envelope ($s_{\alpha(m)}{}^*(t)$) of another data symbol ($\alpha(m)$) of the symbol alphabet in the transmitted signal ($s_{FM}(t)$).

4.  Method for determining an estimated value for a signal-to-noise ratio according to claim 3, **characterised in that** the estimated value ($\hat{S}^{(n)}$) for the squared fading amplitude ($S$) and the estimated value ($\hat{N}_0{}^{(n)}$) for the noise power ($N_0$) of the noise signal ($z_k(t)$) is calculated in each iteration stage ($n$) in each case from the matrix elements ($\rho_{0,0},...,\rho_{o,m},...,\rho_{O-1,M-1}$) of the matrix ($R$) with the cross energies and each output signal ($\underline{y}_0,..,\underline{y}_k,..,\underline{y}_{K-1}$) of each matched filter ($2_0,2_1,...,2_{M-1}$) sampled in a point in time ($k \cdot T_S$) and the conditional probabilities ($p_{k,m}{}^{(n)}$) weighted with the amplitudes ($|y_{k,m}|$) of the output signals ($y_{k,m}$) of the matched filters ($2_0,2_1,...,2_{M-1}$) measured in individual measuring points in time ($k \cdot T_S$) for the matching of the data symbol ($d(k)$) transmitted in each measuring point in time ($k \cdot T_S$) with each data symbol ($\alpha(m)$) of the symbol alphabet.

5.  Method for determining an estimated value for a signal-to-noise ratio according to claim 4, **characterised in that** in the first iteration step the maximum amplitude ($|y_{k,m}|$) of the output signal ($y_{k,m}$) of all the matched filters ($2_0,2_1,...,2_{M-1}$) in each point in time ($k \cdot T_S$) is used for the amplitudes ($|y_{k,m}|$) of the output signals ($y_{k,m}$) of the individual matched filters ($2_0,2_1,...,2_{M-1}$) each weighted with the associated conditional probabilities ($p_{k,m}{}^{(n)}$).

6.  Method for determining an estimated value for a signal-to-noise ratio according to claim 4, **characterised in that** in the following iteration stages ($n$) the amplitudes ($|y_{k,m}|$) of the output signals ($y_{k,m}$) of the individual matched filters ($2_0,2_1,...,2_{M-1}$) each weighted with the associated conditional probabilities ($p_{k,m}{}^{(n+1)}$) determined in the preceding iteration step $n-1$ are used for the amplitudes ($|y_{k,m}|$) of the output signals ($y_{k,m}$) of the individual matched filters ($2_0,2_1,...,2_{M-1}$) each weighted with the associated conditional probabilities ($p_{k,m}{}^{(n)}$).

7.  Method for determining an estimated value for a signal-to-noise ratio according to one of claims 1 to 6, **characterised in that** the conditional probability ($p_{k,m}{}^{(n)}$) for the matching of the data symbol ($d(k)$) transmitted in the particular point in time ($k \cdot T_S$) with the particular data symbol $\alpha(m)$ of the symbol alphabet in the case of measured output signals ($\underline{y}_k$) of the individual matched filters ($2_0,2_1,...,2_{M-1}$) in each iteration stage ($n$) is determined from the estimated values ($\hat{S}^{(n)}, \hat{N}_0{}^{(n)}$) determined in the same iteration stage ($n$) for the squared fading amplitude ($S$) and for the noise power ($N_0$) of the noise signal ($z_k(t)$) and the output signal ($y_{k,m}$) of the particular matched filter ($2_0,2_1,...,2_{M-1}$) and the unconditional probability for the matching of the data symbol ($d(k)$) transmitted in the measuring point in time ($k \cdot T_S$) with the modulated data symbol $\alpha(m)$ of the symbol alphabet.

8.  Method for determining an estimated value ($\hat{S}NR^{(n)}$) for a signal-to-noise ratio of a linearly modulated received signal ($r_{LM}(t)$) which is dependent on a transmitted signal ($s_{LM}(t)$) and a noise signal ($z_k(t)$), by iterative maximum likelihood estimation of an estimated value ($\hat{S}^{(n)}$) for the squared fading amplitude ($S$), of an estimated value ($\hat{N}_0{}^{(n)}$) for the noise power ($N_0$) of the noise signal ($z_k(t)$) and conditional probabilities ($p_{k,m}{}^{(n)}$) for the matching of the amplitude ($|c(k)|$) of each data symbol ($c(k)$) modulated in a point in time $k$ in the transmitted signal ($s_{LM}(t)$) with each amplitude value ($\beta(m)$) of the symbol alphabet used until an estimated value ($\hat{S}NR^{(n)}$) for the signal-to-noise ratio calculated as the quotient of the estimated value ($\hat{S}^{(n)}$) for the squared fading amplitude ($S$) and the estimated value ($\hat{N}_0{}^{(n)}$) for the noise power ($N_0$) of the noise signal ($z_k(t)$) corresponds to a defined convergence criterion, **characterised in that** the estimated value ($\hat{S}^{(n)}$) for the squared fading amplitude ($S$) and the estimated value ($\hat{N}_0{}^{(n)}$) for the noise power ($N_0$) of the noise signal ($z_k(t)$) are determined in an iteration step $n$ by means of maximisation of a probability density function of an output signal of a matched filter ($2'$) to which the linearly modulated received signal ($r_{LM}(t)$) is fed, and a quotient ($\Psi(x)$) of a modified Bessel function of 1st genus and 1st order ($I_1(x)$) and a modified Bessel function of 1st genus and 0th order ($I_0(x)$) appearing during the maximisation of the probability density function is replaced by

$$1 - \frac{a}{x},$$

an approximate term in which $a$ is an adjustable matching factor and $x$ is the argument of the two Bessel functions ($I_0(x)$, $I_1(x)$).

9. Method for determining an estimated value for a signal-to-noise ratio according to claim 8,
**characterised in that**
the estimated value ($\hat{S}^{(n)}$) for the squared fading amplitude ($S$) and the estimated value ($\hat{N}_0^{(n)}$) for the noise power ($N_0$) of the noise signal are determined by means of maximisation of a probability density function $f(\underline{r}|\Phi)$ of the received signal ($\underline{r}_k$).

10. Method for determining an estimated value for a signal-to-noise ratio according to claim 9,
**characterised in that**
the estimated value ($\hat{S}^{(n)}$) for the squared fading amplitude ($S$) and the estimated value ($\hat{N}_0^{(n)}$) for the noise power ($N_0$) of the noise signal ($z_k(t)$) are determined in each iteration step in each case from the squared amplitudes ($|\underline{r}_k|$) of the received signal ($\underline{r}_k$) in each point in time ($k$), from the squared symbol amplitudes ($\beta(m)^2$) of the symbol alphabet which in each case are weighted with each conditional probability ($p_{k,m}^{(n)}$) for the matching of the amplitude ($|c(k)|^2$) of the data symbol ($c(k)$) transmitted in the particular point in time ($k \cdot T_S$) with in each case a symbol amplitude ($\beta(m)$) of the symbol alphabet when the amplitude ($|\underline{r}_k|$) of the received signal ($\underline{r}_k$) in the point in time ($k \cdot T_S$) is known, and from all combinations of the amplitude ($|\underline{r}_k|$) of the received signal ($\underline{r}_k$) in the particular point in time ($k \cdot T_S$) with the particular symbol amplitude ($\beta(m)$) of the symbol alphabet which are weighted with the associated conditional probability ($p_{k,m}^{(n)}$) for the matching of the amplitude ($|c(k)|$) of the data symbol ($c(k)$) transmitted in the particular point in time ($k \cdot T_S$) with the particular symbol amplitude ($\beta(m)$) of the symbol alphabet.

11. Method for determining an estimated value for a signal-to-noise ratio according to claim 10,
**characterised in that**
the conditional probabilities ($p_{k,m}^{(n)}$) required in the first iteration stage for the estimation of the squared fading amplitude ($S$) and the noise power ($N_0$) of the noise signal ($z_k(t)$) are the associated unconditional probabilities.

12. Method for determining an estimated value for a signal-to-noise ratio according to claim 10,
**characterised in that**
the conditional probabilities ($p_{k,m}^{(n)}$) required in the following iteration stages ($n$) for the estimation of the squared fading amplitude ($S$) and the noise power ($N_0$) of the noise signal ($z_k(t)$) are the conditional probabilities ($p_{k,m}^{(n-1)}$) determined in the particular preceding iteration stage ($n$-1).

13. Method for determining an estimated value for a signal-to-noise ratio according to one of claims 8 to 12,
**characterised in that**
the conditional probability ($p_{k,m}^{(n)}$) for the matching of the ($|c(k)|$) of the data symbol ($c(k)$) transmitted in the particular point in time ($k$) with an amplitude value ($\beta(m)$) of the symbol alphabet in each iteration step ($n$) is determined from the estimated value ($\hat{S}^{(n)}$, $\hat{N}_0^{(n)}$) determined in the same iteration step ($n$) for the squared fading amplitude ($S$) and for the noise power ($N_0$) of the noise signal ($z_k(t)$) and squared symbol amplitude values ($\beta(m)^2$) of the symbol alphabet and the symbol amplitude value ($\beta(m)$) of the symbol alphabet weighted with the amplitude ($|\underline{r}_k|$) of the received signal ($r_k$) in the particular point in time ($k \cdot T_S$).

14. Method for determining an estimated value for a signal-to-noise ratio according to one of claims 4 to 6 or 10 to 12,
**characterised in that**
in each case the adjustable matching factor $a$ is included in the estimation of the squared fading amplitude ($S$) and the noise power ($N_0$) of the noise signal ($z_k(t)$).

15. Method for determining an estimated value for a signal-to-noise ratio according to claim 7 or 13,
**characterised in that**
the associated unconditional probability is included in the calculation of the conditional probability ($p_{k,m}^{(n)}$).

16. Method for determining an estimated value for a signal-to-noise ratio according to claim 15,
**characterised in that**
in each case an a *priori* probability is used for the unconditional probability ($p_{k,m}^{(n)}$).

**17.** Method for determining an estimated value for a signal-to-noise ratio according to claim 15,
**characterised in that**
in each case an *a posteriori* probability determined by a decoder (4) is used for the unconditional probability ($p_{k,m}^{(n)}$).

**18.** Device for determining an estimated value ($\hat{S}NR^{(n)}$) for a signal-to-noise ratio of a non-linearly phase-modulated or frequency-modulated received signal ($r_{FM}(t)$) which is dependent on a transmitted signal ($s_{FM}(t)$) and a white noise signal ($z_k(t)$) with a Gaussian distribution, with M matched filters ($2_0, 2_1, ..., 2_{M-1}$) for filtering the received signal ($r_{FM}(t)$) and an estimator (3) which works according to a method for determining an estimated value ($\hat{S}NR^{(n)}$) for a signal-to-noise ratio of a non-linearly phase-modulated or frequency-modulated received signal ($r_{FM}(t)$) with the features of one of claims 1 to 7 or 14 to 17.

**19.** Device for determining an estimated value ($\hat{S}NR^{(n)}$) for a signal-to-noise ratio of a linearly modulated received signal ($r_{LM}(t)$) which is dependent on a transmitted signal ($s_{LM}(t)$) and a white noise signal ($z_k(t)$) with a Gaussian distribution, with a matched filter (2') and an estimator (3') which works according to a method for determining an estimated value ($\hat{S}NR^{(n)}$) for a signal-to-noise ratio of a linearly modulated received signal ($r_{LM}(t)$) with the features of one of claims 8 to 13 or 14 to 17.

**20.** Digital storage medium with electronically readable control signals which are able to cooperate with a programmable computer or digital signal processor such that a method is executed according to one of claims 1 to 17.

**21.** Computer programme with programme code means for carrying out a method according to one of claims 1 to 17 when the computer programme is executed in a computer or a digital signal processor.

**Revendications**

**1.** Procédé de détermination d'une valeur estimée $(\widehat{SNR}^{(n)})$ pour un rapport signal/bruit d'un signal de réception à modulation de phase ou à modulation de fréquence non-linéaire ($r_{FM}(t)$), dépendant d'un signal d'émission ($s_{FM}(t)$) et d'un signal de bruit ($z_k(t)$), par détermination itérative de probabilité maximale d'une valeur estimée ($\hat{S}^{(n)}$) pour l'amplitude fading élevée au carré (S), d'une valeur estimée ($\hat{N}_0^{(n)}$) pour la puissance de bruit ($N_0$) du signal de bruit ($z_k(t)$) et de probabilités conditionnelles ($p_{k,m}^{(n)}$) pour la concordance de chaque symbole de données modulé ($d(k)$) à un moment *k* dans le signal d'émission ($s_{FM}(t)$) avec chaque symbole de données ($\alpha(m)$) de l'alphabet symbolique utilisé, jusqu'à ce qu'une valeur estimée $(\widehat{SNR}^{(n)})$ calculée comme quotient de la valeur estimée ($\hat{S}^{(n)}$) pour l'amplitude fading élevée au carré (S) et de la valeur estimée ($\hat{N}_0^{(n)}$) pour la puissance de bruit ($N_0$) du signal de bruit ($z_k(t)$) corresponde à un critère de convergence défini pour le rapport signal/bruit,
**caractérisé**
**en ce que** la valeur estimée ($\hat{S}^{(n)}$) pour l'amplitude fading élevée au carré (S) et la valeur estimée ($\hat{N}_0^{(n)}$) pour la puissance de bruit *(No)* du signal de bruit ($z_k(t)$) sont déterminées lors d'une phase d'itération n par maximisation d'une fonction de densité de probabilité $f(Y|\Phi)$ de signaux de sortie ($\underline{y}_0, .., \underline{y}_k, .. \underline{y}_{K-1}$) de M filtres accordés ($2_0, 2_1, ..., 2_{M-1}$), lesquels filtrent chacun le signal de réception à modulation de phase ou à modulation de fréquence non-linéaire ($r_{FM}(t)$), et un quotient ($\Psi(x)$) d'une fonction de Bessel modifiée de 1ère espèce et de 1er ordre ($I_1(x)$) et d'une fonction de Bessel modifiée de 1ère espèce et d'ordre 0 ($I_0(x)$) formé à la maximisation de la fonction de densité de probabilité $f(Y|\Phi)$ est remplacé par un terme approximatif $1 - \frac{a}{x}$, où *a* est un facteur d'adaptation réglable et x un argument des deux fonctions de Bessel ($I_0(x), I_1(x)$).

**2.** Procédé de détermination d'une valeur estimée pour un rapport signal/bruit selon la revendication 1,
**caractérisé**
**en ce que** la réponse impulsionnelle de chaque filtre accordé ($2_0, 2_1, ..., 2_{M-1}$) est fonction d'une enveloppante complexe conjuguée, temporellement réfléchie ($s_{d(m)}*(-t)$) d'un symbole de données ($\alpha(m)$) de M symboles de données ($\alpha(m)$) possibles au total de l'alphabet symbolique dans le signal d'émission ($s_{FM}(t)$).

**3.** Procédé de détermination d'une valeur estimée pour un rapport signal/bruit selon la revendication 1 ou la revendication 2,
**caractérisé**
**en ce qu'**une matrice ($R$) à éléments matriciels ($\rho_{0,0},...,\rho_{o,m},...,\rho_{O-1,M-1}$) est calculée, lesquels représentent chacun des énergies croisées possibles entre l'enveloppante complexe ($s_{\alpha(o)}(t)$) d'un symbole de données ($\alpha(o)$) de l'alphabet symbolique dans le signal d'émission ($s_{FM}(t)$) avec l'enveloppante complexe conjuguée ($s_{\alpha(m)}{}^{*}(t)$) d'un autre symbole de données ($\alpha(m)$) de l'alphabet symbolique dans le signal d'émission ($s_{FM}(t)$).

**4.** Procédé de détermination d'une valeur estimée pour un rapport signal/bruit selon la revendication 3,
**caractérisé**
**en ce que** la valeur estimée ($\hat{S}^{(n)}$) pour l'amplitude fading élevée au carré ($S$) et la valeur estimée ($\hat{N}_0^{(n)}$) pour la puissance de bruit ($No$) du signal de bruit ($z_k(t)$) sont respectivement calculées lors de chaque phase d'itération ($n$) à partir des éléments matriciels ($\rho_{0,0},...,\rho_{o,m},...,\rho_{O-1,M-1}$ de la matrice ($R$) occupée par des énergies croisées et de chaque signal de sortie ($\underline{y}_0,..,\underline{y}_k,..,\underline{y}_{K-1}$) de chaque filtre accordé ($2_0,2_1,...,2_{M-1}$) balayé à un moment ($k \cdot Ts$), et des probabilités conditionnelles ($p_{k,m}^{(n)}$) pondérées par les amplitudes ($|y_{k,m}|$) mesurées lors de différents moments de mesure ($k \cdot T_S$) des signaux de sortie ($y_{k,m}$) des filtres accordés ($2_0,2_1,...,2_{M-1}$) pour la concordance du symbole de données ($d(k)$) émis à chaque moment de mesure ($k \cdot T_S$) avec chaque symbole de données ($\alpha(m)$) de l'alphabet symbolique.

**5.** Procédé de détermination d'une valeur estimée pour un rapport signal/bruit selon la revendication 4,
**caractérisé**
**en ce que** lors de la première phase d'itération pour les amplitudes ($|y_{k,m}|$) des signaux de sortie ($y_{k,m}$) des différents filtres accordés ($2_0,2_1,...,2_{M-1}$) pondérées par les probabilités conditionnelles ($p_{k,m}^{(n)}$) correspondantes, l'amplitude maximale ($|y_{k,m}|$) à chaque moment ($k \cdot T_S$) du signal de sortie ($y_{k,m}$) de tous les filtres accordés ($2_0,2_1,...,2_{M-1}$) est exploitée.

**6.** Procédé de détermination d'une valeur estimée pour un rapport signal/bruit selon la revendication 4,
**caractérisé**
**en ce que** lors des phases d'itération ($n$) suivantes pour les amplitudes ($|y_{k,m}|$) des signaux de sortie ($y_{k,m}$) des différents filtres accordés ($2_0,2_1,...,2_{M-1}$) pondérées par les probabilités conditionnelles ($p_{k,m}^{(n)}$) correspondantes, les amplitudes ($|y_{k,m}|$) des signaux de sortie ($y_{k,m}$) des différents filtres accordés ($2_0,2_1,...,2_{M-1}$) pondérées par les probabilités conditionnelles ($p_{k,m}^{(n+1)}$) correspondantes déterminées lors de chaque phase d'itération $n$-1 précédente sont exploitées.

**7.** Procédé de détermination d'une valeur estimée pour un rapport signal/bruit selon l'une des revendications 1 à 6,
**caractérisé**
**en ce que** la probabilité conditionnelle ($p_{k,m}^{(n)}$) pour la concordance du symbole de données ($d(k)$) émis au moment ($k \cdot T_S$) avec le symbole de données $\alpha(m)$ de l'alphabet symbolique pour des signaux de sortie ($\underline{y}_k$) mesurés des différents filtres accordés ($2_0,2_1,...,2_{M-1}$) lors de chaque phase d'itération ($n$) est déterminée à partir des valeurs estimées ($\hat{S}^{(n)}, \hat{N}_0^{(n)}$) lors de la même phase d'itération ($n$) pour l'amplitude fading élevée au carré ($S$) et pour la puissance de bruit ($N_0$) du signal de bruit ($z_k(t)$) et le signal de sortie ($y_{k,m}$) du filtre accordé ($2_0, 2_1,...,2_{M-1}$) respectif, et de la probabilité inconditionnelle pour la concordance du symbole de données ($d(k)$) émis lors du moment de mesure ($k \cdot T_S$) avec le symbole de données modulé $\alpha(m)$ de l'alphabet symbolique.

**8.** Procédé de détermination d'une valeur estimée ($\widehat{SNR^{(n)}}$) pour un rapport signal/bruit d'un signal de réception à modulation linéaire ($r_{LM}(t)$), dépendant d'un signal d'émission ($s_{lM}(t)$) et d'un signal de bruit ($z_k(t)$), par détermination itérative de probabilité maximale d'une valeur estimée ($\hat{S}^{(n)}$) pour l'amplitude fading élevée au carré ($S$), d'une valeur estimée ($\hat{N}_0^{(n)}$) pour la puissance de bruit ($No$) du signal de bruit ($z_k(t)$) et de probabilités conditionnelles ($p_{k,m}^{(n)}$) pour la concordance de l'amplitude ($|c(k)|$) chaque symbole de données modulé ($c(k)$) à un moment $k$ dans le signal d'émission ($s_{LM}(t)$) avec chaque valeur d'amplitude ($\beta(m)$) de l'alphabet symbolique utilisé, jusqu'à ce qu'une valeur estimée ($\widehat{SNR^{(n)}}$) calculée comme quotient de la valeur estimée ($\hat{S}^{(n)}$) pour l'amplitude fading élevée au carré ($S$) et de la valeur estimée ($\hat{N}_0^{(n)}$) pour la puissance de bruit ($N_0$) du signal de bruit ($z_k(t)$) corresponde à un critère de convergence défini pour le rapport signal/bruit,
**caractérisé**
**en ce que** la valeur estimée ($\hat{S}^{(n)}$) pour l'amplitude fading élevée au carré ($S$) et la valeur estimée ($\hat{N}_0^{(n)}$) pour la puissance de bruit ($N_0$) du signal de bruit ($z_k(t)$) sont déterminées lors d'une phase d'itération n par maximisation d'une fonction de densité de probabilité d'un signal de sortie d'un filtre accordé (2'), auquel est acheminé le signal de réception à modulation linéaire ($r_{LM}(t)$), et un quotient ($\Psi(x)$) d'une fonction de Bessel modifiée de 1ère espèce et de 1er ordre ($I_1(x)$) et d'une fonction de Bessel modifiée de 1ère espèce et d'ordre 0 ($I_0(x)$) formé à la maximisation de la fonction de densité de probabilité est remplacé par un terme approximatif $1 - \dfrac{a}{x}$, où a est un facteur d'adaptation réglable et $x$ un argument des deux fonctions de Bessel ($I_0(x)$, $I_1(x)$).

9. Procédé de détermination d'une valeur estimée pour un rapport signal/bruit selon la revendication 8,
**caractérisé**
**en ce que** la valeur estimée ($\hat{S}^{(n)}$) pour l'amplitude fading élevée au carré ($S$) et la valeur estimée ($\hat{N}_0^{(n)}$) pour la puissance de bruit ($N_0$) du signal de bruit sont déterminées par maximisation d'une fonction de densité de probabilité $f(\underline{r}|\Phi)$ du signal de réception ($\underline{r}_k$).

10. Procédé de détermination d'une valeur estimée pour un rapport signal/bruit selon la revendication 9,
**caractérisé**
**en ce que** la valeur estimée ($\hat{S}^{(n)}$) pour l'amplitude fading élevée au carré ($S$) et la valeur estimée ($\hat{N}_0^{(n)}$) pour la puissance de bruit ($N_0$) du signal de bruit ($z_k(t)$) sont respectivement déterminées lors de chaque phase d'itération à partir des amplitudes élevées au carré ($|\underline{r}_k|$) du signal de réception ($\underline{r}_k$) à chaque moment ($k$), des amplitudes symboliques élevées au carré ($\beta(m)^2$) de l'alphabet symbolique, pondérées par chaque probabilité conditionnelle ($p_{k,m}^{(n)}$) pour la concordance de l'amplitude ($|c(k)|^2$) du symbole de données ($c(k)$) émis au moment ($k \cdot T_S$) respectif avec une amplitude symbolique ($\beta(m)$) de l'alphabet symbolique en cas d'amplitude ($|\underline{r}_k|$) connue du signal de réception ($\underline{r}_k$) au moment ($k \cdot T_S$), et à partir de toutes les combinaisons de l'amplitude ($|\underline{r}_k|$) du signal de réception ($\underline{r}_k$) au moment ($k \cdot T_S$) respectif avec l'amplitude symbolique ($\beta(m)$) de l'alphabet symbolique, pondérée par la probabilité conditionnelle ($p_{k,m}^{(n)}$) correspondante pour la concordance de l'amplitude ($|c(k)|$) du symbole de données ($c(k)$) émis au moment ($k \cdot T_S$) respectif avec l'amplitude symbolique ($\beta(m)$) de l'alphabet symbolique.

11. Procédé de détermination d'une valeur estimée pour un rapport signal/bruit selon la revendication 10,
**caractérisé**
**en ce que** les probabilités conditionnelles ($p_{k,m}^{(n)}$) exigées lors de la première phase d'itération pour l'estimation de l'amplitude fading élevée au carré ($S$) et de la puissance de bruit ($No$) du signal de bruit ($z_k(t)$) sont les probabilités inconditionnelles correspondantes.

12. Procédé de détermination d'une valeur estimée pour un rapport signal/bruit selon la revendication 10,
**caractérisé**
**en ce que** les probabilités conditionnelles ($p_{k,m}^{(n)}$) exigées lors des phases d'itération ($n$) suivantes pour l'estimation de l'amplitude fading élevée au carré ($S$) et de la puissance de bruit ($N_0$) du signal de bruit ($z_k(t)$) sont les probabilités conditionnelles ($p_{k,m}^{(n-1)}$) déterminées lors de chaque phase d'itération ($n$-1) précédente.

13. Procédé de détermination d'une valeur estimée pour un rapport signal/bruit selon l'une des revendications 8 à 12,
**caractérisé**
**en ce que** la probabilité conditionnelle ($p_{k,m}^{(n)}$) pour la concordance de l'amplitude ($|c(k)|$) du symbole de données ($c(k)$) émis au moment ($k$) avec une valeur d'amplitude ($\hat{\beta}(m)$) de l'alphabet symbolique est déterminée lors de chaque phase d'itération ($n$) à partir de la valeur estimée ($\hat{S}^{(n)}$, $\hat{N}_0^{(n)}$) déterminée lors de la même phase d'itération ($n$) pour l'amplitude fading élevée au carré ($S$) et pour la puissance de bruit ($N_0$) du signal de bruit ($z_k(t)$) et de valeurs d'amplitudes symboliques élevées au carré ($\beta(m)^2$) de l'alphabet symbolique, et de la valeur d'amplitude symbolique ($\beta(m)$) de l'alphabet symbolique pondérée par l'amplitude ($|r_k|$) du signal de réception ($r_k$) lors du moment ($k \cdot T_S$).

14. Procédé de détermination d'une valeur estimée pour un rapport signal/bruit selon l'une des revendications 4 à 6 ou 10 à 12,
**caractérisé**
**en ce que** le facteur d'adaptation réglable a est intégré à l'estimation de l'amplitude fading élevée au carré ($S$) et de la puissance de bruit ($N_0$) du signal de bruit ($z_k(t)$).

15. Procédé de détermination d'une valeur estimée pour un rapport signal/bruit selon la revendication 7 ou la revendication 13,
**caractérisé**

**en ce que** la probabilité inconditionnelle correspondante est intégrée au calcul de la probabilité conditionnelle ($p_{k,m}^{(n)}$).

16. Procédé de détermination d'une valeur estimée pour un rapport signal/bruit selon la revendication 15, **caractérisé** **en ce qu'**une probabilité a priori est exploitée pour la probabilité inconditionnelle ($p_{k,m}^{(n)}$).

17. Procédé de détermination d'une valeur estimée pour un rapport signal/bruit selon la revendication 15, **caractérisé** **en ce qu'**une probabilité a posteriori déterminée par un décodeur (4) est exploitée pour la probabilité inconditionnelle ($p_{k,m}^{(n)}$).

18. Dispositif pour la détermination d'une valeur estimée $(\widehat{SNR}^{(n)})$ pour un rapport signal/bruit d'un signal de réception à modulation de phase ou à modulation de fréquence non-linéaire ($r_{FM}(t)$), dépendant d'un signal d'émission ($s_{FM}(t)$) et d'un signal de bruit ($z_k(t)$) blanc à distribution gaussienne, avec M filtres accordés ($2_0, 2_1, ..., 2_{M-1}$) pour le filtrage du signal de réception ($r_{FM}(t)$) et un estimateur (3) fonctionnant suivant un procédé de détermination d'une valeur estimée $(\widehat{SNR}^{(n)})$ pour un rapport signal/bruit d'un signal de réception à modulation de phase ou à modulation de fréquence non-linéaire ($r_{FM}(t)$) ayant les caractéristiques d'une des revendications 1 à 7 ou 14 à 17.

19. Dispositif pour la détermination d'une valeur estimée $(\widehat{SNR}^{(n)})$ pour un rapport signal/bruit d'un signal de réception à modulation linéaire ($r_{LM}(t)$), dépendant d'un signal d'émission ($s_{LM}(t)$) et d'un signal de bruit ($z_k(t)$) blanc à distribution gaussienne, avec un filtre accordé (2') et un estimateur (3') fonctionnant suivant un procédé de détermination d'une valeur estimée $(\widehat{SNR}^{(n)})$ pour un rapport signal/bruit d'un signal de réception à modulation linéaire ($r_{LM}(t)$) ayant les caractéristiques d'une des revendications 8 à 13 ou 14 à 17.

20. Support de mémoire numérique avec des signaux de commande lisibles électroniquement pouvant coopérer avec un ordinateur ou un processeur de signaux numérique programmables de manière à exécuter un procédé selon l'une des revendications 1 à 17.

21. Programme informatique avec des moyens de code-programme pour l'exécution d'un procédé selon l'une des revendications 1 à 17 quand ledit programme informatique est exécuté sur un ordinateur ou un processeur de signaux numérique.

Fig. 1

Fig. 2

Start

S10 — Berechnen der Zwischengröße $B^{(0)}$ im Initialisierungsschritt 0 durch die Summe der im jeweiligen Meßzeitpunkt k maximalen Matched-Filterausgangssignale max $\{y_{k,m}\}$

S20 — Berechnen der Zwischengröße D als beidseitige Gewichtung der mit Kreuzenergien besetzten, inversen Matrix $R^{-1}$ mit den einzelnen Matched-Filterausgangssignalen $\underline{y}_k$ zu den einzelnen Meßzeitpunkten k

S30 — Berechnen der Schätzwerte $\hat{S}^{(n)}$ und $\hat{N}_0^{(n)}$ der quadrierten Fadingamplitude und der Rauschleistung im jeweiligen Iterationsschritt n

S40 — Berechnen der bedingten Wahrscheinlichkeiten $p_{k,m}^{(n)}$ für das Ereignis im jeweiligen Iterationsschritt n, daß das im Meßzeitpunkt k gesendete Datensymbol d(k) dem Datensymbol $\alpha(m)$ des Symbolalphabets bei im selben Iterationsschritt n ermittelten Schätzwerten $\hat{S}^{(n)}$ und $\hat{N}_0^{(n)}$ der quadrierten Fading-amplitude und der Rauschleistung und im Meßzeitpunk k gemessenen Matched-Filter-Ausgangssignalen $\underline{y}_k$ entspricht

S50 — Berechnen der Zwischengröße $B^{(n)}$ im Iterationsschritt n aus den mit dem er-mittelten bedingten Wahrscheinlichkeiten $p_{k,m}^{(n)}$ gewichteten Beträgen $|\underline{y}_k|$ der Matched-Filterausgangssignale $\underline{y}_k$ im Meßzeitpunkt k

S60 — Berechnen des Schätzwerts $\widehat{SNR}^{(n)}$ für den Signal-Rausch-Abstand aus dem Quotient des Schätzwerts $\hat{S}^{(n)}$ für die quadrierte Fadingamplitude S und des Schätzwerts $\hat{N}_0^{(n)}$ der Rauschleistung

ja — Konvergenz-Kriterium erfüllt ? — nein — Inkrementieren von n

S70

Ende

# Fig. 3

Start

S100 — Ermitteln der bedingten Wahrscheinlichkeiten $p_{k,m}^{(0)}$ im Iterationsschritt 0, aus den a-priori-Wahrscheinlichkeiten, daß das im Meßzeitpunkt k gesendete Datensymbol c(k) dem Datensymbol $\beta(m)$ des Symbolalphabets entspricht

S110 — Berechnen der Zwischengröße $\alpha_{k,m}$ aus der Gewichtung der im Meßzeitpunkt k gemessenen Empfangssignalamplitude $|r_k|$ mit der Amplitude $|c(m)|$ des Datensymbols $\beta(m)$ des Symbolalphabets und des Mittelwerts L der über alle Meßzeitpunkte k gemessenen Empfangssignalamplituden $|r_k|$

S120 — Berechnen des mit dem a-posteriori-Wahrscheinlichkeiten $p_{k,m}^{(n-1)}$ gewichteten Mittelwerts $\eta_k^{(n-1)}$ und quadrierten Mittelwerts $\varphi_k^{(n-1)}$ der Datensymbolamplituden $|c(m)|$ des Symbolalphabets und der zugehörigen Mittelwerte $C^{(n-1)}$ und $A^{(n-1)}$ über alle Meßzeitpunkte k

S130 — Berechnen der Schätzwerte $\hat{S}^{(n)}$ und $\hat{N}_0^{(n)}$ der quadrierten Fadingamplitude und der Rauschleistung im jeweiligen Iterationsschritt

S140 — Berechnen der bedingten a-posteriori-Wahrscheinlichkeit $p_{k,m}^{(n)}$ für das Ereignis im jeweiligen Iterationsschritt n, daß die im Meßzeitpunkt k gesendete Datensymbolamplitude $|c(k)|$ der Datensymbolamplitude $|c(m)|$ des Symbolalphabets bei im vorherigen Iterationsschritt n-1 ermittelten Schätzwerten $\hat{S}^{(n-1)}$ und $\hat{N}_0^{(n)}$ der Signal- und Rauschleistung und Meßzeitpunk k gemessenen Matched-Filter-Ausgangssignalen $\underline{y}_k$ entspricht

S150 — Berechnen des Schätzwerts $\hat{SNR}^{(n)}$ für den Signal-Rausch-Abstand aus dem Quotient des Schätzwerts $\hat{S}^{(n)}$ für die quadrierte Fadingamplitude S und des Schätzwerts $\hat{N}_0^{(n)}$ der Rauschleistung

ja ← Konvergenz-Kriterium erfüllt ? → nein → Inkrementieren von n

S160

Ende

## Fig. 4

**Legende**

Modulation: CPS
M = 4
K = 64
$k = \frac{1}{4}$
$a = \frac{130}{256}$

Ideal
StdT
Erfindung

Signal-Rausch-
Abstand

normalisierter mittlerer
Schätzfehler

**Fig. 5**

normalisierter mittlerer
Schätzfehler

QAM16 (K=512)

**Legende**

Modulation: 16QAM
M = 3
K = 512

Ideal
StdT
Erfindung $a = \frac{129}{256}$
Erfindung $a = \frac{130}{256}$
Erfindung $a = \frac{131}{256}$

Signal-Rausch-
Abstand

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DAVID R. PAULUZZI et al.** A Comparison on SNR Estimation Techniques for the AWGN Channel. *IEEE Transaction on Communications,* Oktober 2000, vol. 48 (10), 1681-1691
- **LOPEZ-VALCARCE R et al.** Iterative envelope-based SNR estimation for nonconstant modulus constellations. *SPAWC 2007 - IEEE 8TH WORK-SHOP,* 17. Juni 2007, 1-5
- **N. NOELS et al.** A Theoretical Framework for Soft-Information-Based Synchronization in Iterative (Turbo) Receivers. *EURASIP Journal on Wireless Communications and Networking,* 2005, vol. 2, 117-129
- **GAO, F. ; TEPEDELENLIOGLU, C.** SNR estimation for non-constant modulus constellation. *IEEE Trans. Signal Processing,* Marz 2005, vol. 53, 865-870